(19) Europäisches Patentamt
European Patent Office
Office européen des brevets

(11) **EP 4 604 532 A1**

(12) **EUROPEAN PATENT APPLICATION**
published in accordance with Art. 153(4) EPC

(43) Date of publication:
**20.08.2025 Bulletin 2025/34**

(21) Application number: **22961765.9**

(22) Date of filing: **13.10.2022**

(51) International Patent Classification (IPC):
**H04N 19/30** (2014.01)        **H04N 19/42** (2014.01)
**H04N 19/70** (2014.01)

(52) Cooperative Patent Classification (CPC):
**H04N 19/30; H04N 19/42; H04N 19/70**

(86) International application number:
**PCT/CN2022/125231**

(87) International publication number:
**WO 2024/077576 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **DAI, Joey
Dongguan, Guangdong 523860 (CN)**

(74) Representative: **RGTH
Patentanwälte PartGmbB
Neuer Wall 10
20354 Hamburg (DE)**

(54) **NEURAL NETWORK BASED LOOP FILTER METHODS, VIDEO CODING METHOD AND APPARATUS, VIDEO DECODING METHOD AND APPARATUS, AND SYSTEM**

(57)    A neural network based loop filtering method, a video encoding method and apparatus, a video decoding method and apparatus, and a system. When a coding side performs NNLF on a reconstructed picture, an NNLF mode with residual offset or an NNLF mode without residual offset may be selected. A decoding side selects one of the modes to perform NNLF on the reconstructed picture according to a flag. The encoding performance may be improved.

A reconstructed picture is input into a neural network, to obtain a residual picture output by the neural network — S110

A rate distortion cost cost1 of performing NNLF on the reconstructed picture using a first mode is calculated, and a rate distortion cost cost2 of performing NNLF on the reconstructed picture using a second mode is calculated — S120

The first mode is selected to perform NNLF on the reconstructed picture in a case of cost1 ≤ cost2; and the second mode is selected to perform NNLF on the reconstructed picture in a case of cost2 < cost1 — S130

FIG. 7

**Description**

## TECHNICAL FIELD

Embodiments of the present disclosure relate to, but are not limited to video technology, and more particularly, to a neural network based loop filtering method, a video encoding method and apparatus, a video decoding method and apparatus, and a system.

## BACKGROUND

Digital video compression technology is mainly used to compress huge digital image video data for facilitating transmission and storage. A picture of an original video sequence contains luma and chroma components. In a process of digital video encoding, an encoder reads a monochrome picture or color picture and partitions each frame of the picture into largest coding unit (LCU) with the same size (such as 128x128 or 64x64). According to a rule, each largest coding unit may be partitioned into rectangular coding units (CUs), and may be further partitioned into prediction units (PUs), transform units (TU), or the like. A hybrid encoding framework includes a prediction module, a transform module, a quantization module, an entropy coding module, an in loop filter module or the like. The prediction module may employ intra prediction and inter prediction. The intra prediction predicts pixel information within a current block based on information of the same picture, to eliminate spatial redundancy. The inter prediction may refer to information of different pictures, and search for motion vector information that best matches with the current block by using motion estimation, to eliminate temporal redundancy. The transform may convert the predicted residual to a frequency domain, to redistribute its energy. Combined with the quantization, information that is not sensitive to the human eye may be removed, to eliminate visual redundancy. The entropy coding may eliminate character redundancy according to probability information of a binary bitstream and a current context model, to generate a bitstream.

With the proliferation in Internet videos and increasing demand for video definition from people, although the existing digital video compression standards may save a lot of video data, it is still necessary to pursue better digital video compression technology to reduce the bandwidth and traffic pressure of the digital video transmission.

## SUMMARY

The following is a summary for the subject matters described in detail herein. This summary is not intended to limit the scope of the claims.

An embodiment of the present disclosure provides a neural network based loop filtering (NNLF) method, which is applied to a filter for NNLF at a decoding side. The filter for NNLF includes a neural network and a skip connection branch from an input to an output of the filter for NNLF, and the method includes:

decoding a residual offset usage flag roflag of a reconstructed picture, where the roflag is used to indicate whether residual offset needs to be performed when NNLF is performed on the reconstructed picture; and

performing NNLF on the reconstructed picture using a first mode in response to determining, according to the roflag, that residual offset does not need to be performed, or performing NNLF on the reconstructed picture using a second mode in response to determining, according to the roflag, that residual offset needs to be performed;

where the first mode is an NNLF mode that residual offset is not performed on a residual picture output by the neural network, and the second mode is an NNLF mode that residual offset is performed on the residual picture.

An embodiment of the present disclosure further provides a neural network based loop filtering method, which is applied to a filter for NNLF at a decoding side. The filter for NNLF includes a neural network and a skip connection branch from an input to an output of the filter for NNLF, and the method includes: when NNLF is performed on a reconstructed picture including three components input to the neural network, performing following processes for each component of the reconstructed picture:

decoding a residual offset usage flag roflag of the component of the reconstructed picture, where the roflag is used to indicate whether residual offset needs to be performed when NNLF is performed on the component of the reconstructed picture; and

performing NNLF on the component of the reconstructed picture using a first mode in response to determining, according to the roflag, that residual offset does not need to be performed, or performing NNLF on the component of the reconstructed picture using a second mode in response to determining, according to the roflag, that residual offset needs to be performed;

where the first mode is an NNLF mode that residual offset is not performed on the component of a residual picture output by the neural network, and the second mode is an NNLF mode that residual offset is performed on the component of the residual picture.

An embodiment of the present disclosure further provides a video decoding method, which is applied to a video decoding apparatus and includes: performing following processes when NNLF is performed on a reconstructed picture: responsive to that NNLF enables residual offset, performing NNLF on the reconstructed picture according to the NNLF methods described in any one of embodiments applied to the filter for NNLF at the decoding side of the present disclosure.

An embodiment of the present disclosure further provides a neural network based loop filtering method, which is applied to a filter for NNLF at an encoding side. The filter for NNLF includes a neural network and a skip connection branch from an input to an output of the filter for NNLF, and the method includes:

inputting a reconstructed picture into the neural network, to obtain a residual picture output by the neural network, calculating a rate distortion cost $cost_1$ of performing NNLF on the reconstructed picture using a first mode and a rate distortion cost $cost_2$ of performing NNLF on the reconstructed picture using a second mode, where the first mode is an NNLF mode that residual offset is not performed on the residual picture, and the second mode is an NNLF mode that residual offset is performed on the residual picture; and

selecting the first mode to perform NNLF on the reconstructed picture responsive to that the $cost_1$ is less than the $cost_2$, selecting the second mode to perform NNLF on the reconstructed picture responsive to that the $cost_2$ is less than the $cost_1$, or selecting the first mode or the second mode to perform NNLF on the reconstructed picture responsive to that the $cost_1$ is equal to the $cost_2$.

An embodiment of the present disclosure further provides a neural network based loop filtering method, which is applied to a filter for NNLF at an encoding side. The filter for NNLF includes a neural network and a skip connection branch from an input to an output of the filter for NNLF, and the method includes:

inputting a reconstructed picture into the neural network, to obtain a residual picture output by the neural network, where both the reconstructed picture and the residual picture include three components; and
performing following processes for each component of the reconstructed picture and the residual picture:

calculating a rate distortion cost $cost_1$ of performing NNLF on the component of the reconstructed picture using a first mode and a rate distortion cost $cost_2$ of performing NNLF on the component of the reconstructed picture using a second mode, where the first mode is an NNLF mode that residual offset is not performed on the component of the residual picture, and the second mode is an NNLF mode that residual offset is performed on the component of the residual picture; and
selecting the first mode to perform NNLF on the component of the reconstructed picture responsive to that the $cost_1$ is less than the $cost_2$ selecting the second mode to perform NNLF on the component of the reconstructed picture responsive to that the $cost_2$ is less than the $cost_1$, or selecting the first mode or the second mode to perform NNLF on the reconstructed picture responsive to that the $cost_1$, is equal to the $cost_2$.

An embodiment of the present disclosure further provides a video encoding method, which is applied to a video encoding apparatus and includes: performing following processes when NNLF is performed on a reconstructed picture:

responsive to that NNLF enables residual offset, performing NNLF on the reconstructed picture according to the NNLF methods described in any one of embodiments applied to the filter for NNLF at the encoding side of the present disclosure;
encoding a residual offset usage flag of the reconstructed picture, to indicate whether residual offset needs to be performed when NNLF is performed on the reconstructed picture.

An embodiment of the present disclosure further provides a bitstream, where the bitstream is generated by the video encoding method described in any one of embodiments of the present disclosure.
An embodiment of the present disclosure further provides a neural network based loop filter, which includes a processor and a memory storing a computer program. The processor, when executing the computer program, is capable of implementing the neural network based loop filtering methods described in any one of embodiments of the present disclosure.
An embodiment of the present disclosure further provides a video decoding apparatus, which includes a processor and a memory storing a computer program. The processor, when executing the computer program, is capable of implementing the video decoding method described in any one of embodiments of the present disclosure.
An embodiment of the present disclosure further provides a video encoding apparatus, which includes a processor and a memory storing a computer program. The processor, when executing the computer program, is capable of implementing the video encoding method described in any one of embodiments of the present disclosure.

An embodiment of the present disclosure further provides a video encoding and decoding system, which includes the video encoding apparatus described in any one of embodiments of the present disclosure and the video decoding apparatus described in any one of embodiments of the present disclosure.

An embodiment of the present disclosure further provides a non-transitory computer readable storage medium, and the computer readable storage medium stores a computer program. The computer program, when executed by a processor, is capable of implementing the neural network based loop filtering methods described in any one of embodiments of the present disclosure, or implementing the video decoding method described in any one of embodiments of the present disclosure, or implementing the video encoding method described in any one of embodiments of the present disclosure.

Other aspects may be understood upon reading and understanding the drawings and detailed description.

## BRIEF DESCRIPTION OF THE DRAWINGS

The accompanying drawings are used to provide understanding of the embodiments of the present disclosure, and constitute a part of the description, which is used to illustrate technical solutions of the present disclosure together with the embodiments of the present disclosure, and do not constitute a limitation to the technical solutions of the present disclosure.

FIG. 1A is a schematic diagram of an encoding and decoding system according to an embodiment, FIG. 1B is a framework diagram of an encoding side in FIG. 1A, and FIG. 1C is a framework diagram of a decoding side in FIG. 1A.

FIG. 2 is a module diagram of a filter unit according to an embodiment.

FIG. 3A is a network structural diagram of a filter for NNLF according to an embodiment, FIG. 3B is a structural diagram of a residual block in FIG. 3A; and FIG. 3C is a schematic diagram of input and output of the filter for NNLF in FIG. 3A.

FIG. 4A is a structural diagram of a backbone network in a filter for NNLF of another embodiment, FIG. 4B is a structural diagram of a residual block in FIG. 4A; and FIG. 4C is a schematic diagram of input and output of the filter for NNLF in FIG. 4A.

FIG. 5 is a schematic diagram of a basic network structure of a residual network.

FIG. 6A is a schematic diagram of performing iterative training on an NNLF model according to an embodiment; and FIG. 6B is a schematic diagram of performing encoding testing on the NNLF model in FIG. 6A.

FIG. 7 is a flowchart of an NNLF method applied to an encoding side according to an embodiment of the present disclosure.

FIG. 8 is a flowchart of an NNLF method applied to an encoding side according to another embodiment of the present disclosure.

FIG. 9 is a flowchart of a video encoding method according to an embodiment of the present disclosure.

FIG. 10 is a flowchart of an NNLF method applied to a decoding side according to an embodiment of the present disclosure.

FIG. 11 is a schematic diagram of an NNLF capable of mode selection according to an embodiment of the present disclosure.

FIG. 12 is a flowchart of an NNLF method applied to a decoding side according to another embodiment of the present disclosure.

FIG. 13 is a flowchart of a video decoding method according to an embodiment of the present disclosure.

FIG. 14 is a schematic diagram of a filter unit according to an embodiment of the present disclosure.

FIG. 15 is a schematic diagram of a filter for NNLF according to an embodiment of the present disclosure.

FIG. 16 is a schematic diagram of residual value offset according to an embodiment of the present disclosure.

## DETAILED DESCRIPTION

Multiple embodiments are described in the present disclosure, however, the description is exemplary rather than restrictive, and it is apparent to those skilled in the art that there may be more embodiments and implementations within the scope of the embodiments described in the present disclosure.

In the description of the present disclosure, the wordings, such as "exemplarily" or "for example" and variations thereof, are used to indicate examples, instances, or illustrations. Any embodiment described in the present disclosure with wordings such as "exemplarily" or "for example" should not be illustrated as being more preferred or advantageous over other embodiments. The term "and/or" in the present disclosure is just the description for an association relationship between related objects, indicating that there are three relationships. For example, A and/or B may represent these three situations: A exists alone; A and B exist simultaneously; or B exists alone. Terms "multiple" or "a plurality of" and variations thereof mean two or more than two. In addition, in order to describe the technical solutions of the embodiments of the present disclosure clearly, wordings such as "first" and "second" are adopted to distinguish same or similar items with substantially same functions and effects. Those skilled in the art may understand that wordings such as "first", "second" do not limit the quantity and the execution order, and the wordings such as "first", "second" do not limit that corresponding objects must be different.

When describing representative exemplary embodiments, the description may have presented methods and/or processes with a specific sequence of steps. However, to the extent that the methods or processes do not depend on the specific order of steps described herein, the methods or processes should not be limited to the specific order of steps as described. As those of ordinary skill in the art will understand, other orders of steps are also possible. Therefore, the specific order of steps set forth in the description should not be construed as the limitations of the claims. Furthermore, the claims for the methods and/or processes should not be limited to the described orders to perform their steps, and those skilled in the art may readily understand that these orders may be varied, and still remain within the spirit and scope of the embodiments of the present disclosure.

Neural network based loop filtering methods, a video encoding method and a video decoding method of the embodiments of the present disclosure may be applied to various video codec standards, for example, H.264/Advanced Video Coding (AVC), H.265/High Efficiency Video Coding (HEVC), H.266/Versatile Video Coding (VVC), Audio Video coding Standard (AVS), and other standards formulated by Moving Picture Experts Group (MPEG), Alliance for Open Media (AOM) and Joint Video Experts Team (JVET) and extensions of these standards, or any other customized standards.

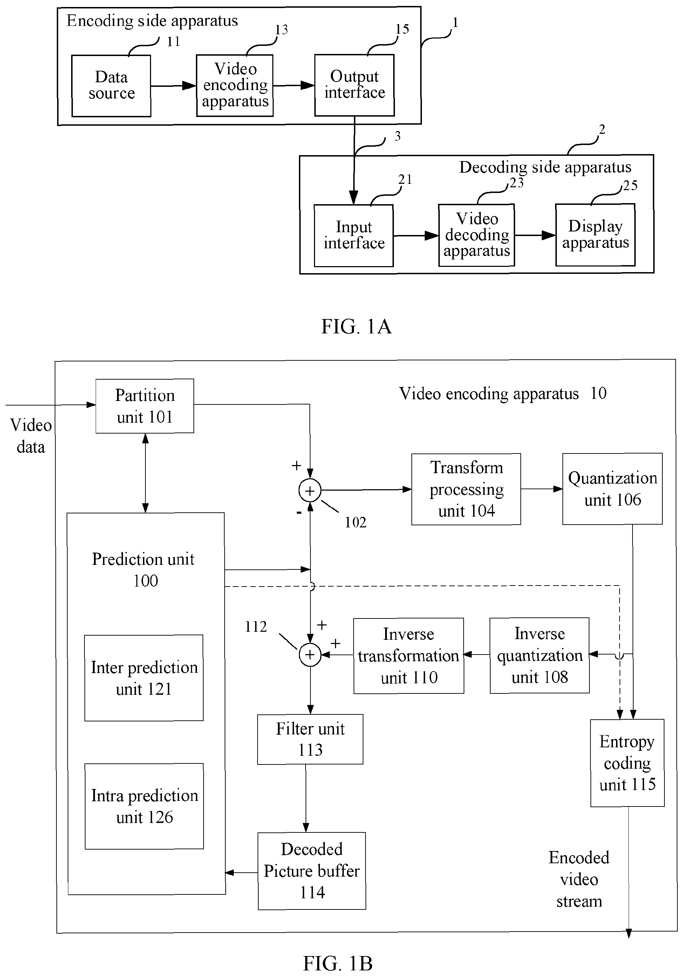

FIG. 1A is a block diagram of a video encoding and decoding system applied to the embodiments of the present disclosure. As shown in FIG. 1A, the system is divided into an encoding side 1 and a decoding side 2, and the encoding side 1 generates a bitstream. The decoding side 2 may decode the bitstream. The decoding side 2 may receive the bitstream from the encoding side 1 via a link 3. The link 3 includes one or more media or apparatus that may move the bitstream from the encoding side 1 to the decoding side 2. In an example, the link 3 includes one or more communication media that enable the encoding side 1 to send the bitstream directly to the decoding side 2. The encoding side 1 modulates the bitstream according to a communication standard, and sends the modulated bitstream to the decoding side 2. The one or more communication media may include wireless and/or wired communication media, which may form a part of a packet network. In another example, the bitstream may be output from an output interface 15 to a storage apparatus, and the decoding side 2 may read stored data from the storage apparatus via stream transmission or downloading.

As illustrated in FIG. 1A, the encoding side 1 includes a data source 11, a video encoding apparatus 13 and the output interface 15. The data source 11 includes a video capture apparatus (e.g., a camera), an archive containing data previously captured, a feed interface for receiving data from a content provider, a computer graphics system for generating data, or a combination of these sources. The video encoding apparatus 13 may be referred to as a video encoder, which is configured to encode data from the data source 11 and outputs the coded data to the output interface 15. The output interface 15 may include at least one of a regulator, a modem and a transmitter. The decoding side 2 includes an input interface 21, a video decoding apparatus 23 and a display apparatus 25. The input interface 21 includes at least one of a receiver and a modem. The input interface 21 may receive the bitstream via the link 3 or from the storage apparatus. The video decoding apparatus 23 is also referred to as a video decoder, which is configured to decode the received bitstream. The display apparatus 25 is configured to display decoded data. The display apparatus 25 may be integrated with other apparatus of the decoding side 2 or arranged separately, and for the decoding side, the display apparatus 25 is optionally. In other examples, the decoding side may include other apparatus or equipment that apply the decoded data.

FIG. 1B is a block diagram of an exemplary video encoding apparatus that may be applied to the embodiments of the present disclosure. As illustrated in the FIG. 1B, the video encoding apparatus 10 includes the following units.

A partition unit 101, and the partition unit 101 is configured to cooperate with a prediction unit 100, to partition received video data into slices, coding tree units (CTUs) or other larger units. The received video data may be a video sequence including video frames such as I frames, P frames or B frames.

A prediction unit 100, and the prediction unit 100 is configured to partition the CTU into coding units (CUs) and perform intra prediction encoding or inter prediction encoding on the CUs. When intra prediction and inter prediction are performed on a CU, the CU may be partitioned into one or more prediction units (PUs).

The prediction unit 100 includes an inter prediction unit 121 and an intra prediction unit 126.

The inter prediction unit 121 is configured to perform inter prediction on the PU, to generate prediction data for the PU, where the prediction data includes a prediction block of the PU, motion information of the PU and various syntax elements. The inter prediction unit 121 may include a motion estimation (ME) unit and a motion compensation (MC) unit. The motion estimation unit may be configured for motion estimation, to generate a motion vector, and the motion compensation unit may be configured to obtain or generate a prediction block according to the motion vector.

The intra prediction unit 126 is configured to perform intra prediction on the PU, to generate prediction data for the PU. The prediction data for the PU may include a prediction block of the PU and various syntax elements.

A residual generation unit 102 (represented by a circle with a plus sign behind the partition unit 101 in FIG. 1B), and the residual generation unit 102 is configured to subtract, based on an original block of the CU, the prediction block of the PU into which the CU is partitioned, to generate a residual block of the CU.

A transform processing unit 104, and the transform processing unit 104 is configured to partition the CU into one or more transform units (TUs), and the partition of the prediction unit and the partition of the transform unit may be different. A residual block associated with a TU is a sub-block obtained by partitioning the residual block of thea CU. A coefficient block associated with the TU is generated by applying one or more transforms to the residual block associated with the TU.

A quantization unit 106, and the quantization unit 106 is configured to quantize a coefficient in the coefficient block based on quantizer parameters. A quantization degree of the coefficient block may be adjusted by adjusting the quantizer parameters (QP).

An inverse quantization unit 108 and an inverse transform processing unit 110, and the inverse quantization unit 108 and the inverse transform processing unit 110 are configured to apply inverse quantization and inverse transform to the coefficient block, respectively, to obtain a reconstructed residual block associated with the TU.

A reconstruction unit 112 (represented by a circle with a plus sign behind the inverse transform processing unit 110 in the FIG. 1B), and the reconstruction unit 112 is configured to add the reconstructed residual block and the prediction block generated by the prediction unit 100, to generate a reconstructed picture.

A filter unit 113, and the filter unit 113 is configured to perform in loop filtering on the reconstructed picture.

A decoded picture buffer 114, and the decoded picture buffer 114 is configured to store the reconstructed picture after in loop filtering. The intra prediction unit 126 may extract a reference picture of a block adjacent to the current block from the decoded picture buffer 114 to perform intra prediction. The inter prediction unit 121 may perform inter prediction on a PU of a current frame picture by using a reference picture of a previous frame buffered by the decoded picture buffer 114.

Am entropy coding unit 115, and the entropy coding unit 115 is configured to perform an entropy coding operation on the received data (such as syntax elements, quantized coefficient blocks and motion information), to generate a video bitstream.

In other examples, the video encoding apparatus 10 may include more, fewer or different functional components than those in this example, for example, cancelling the transform processing unit 104 and the inverse transform processing unit 110.

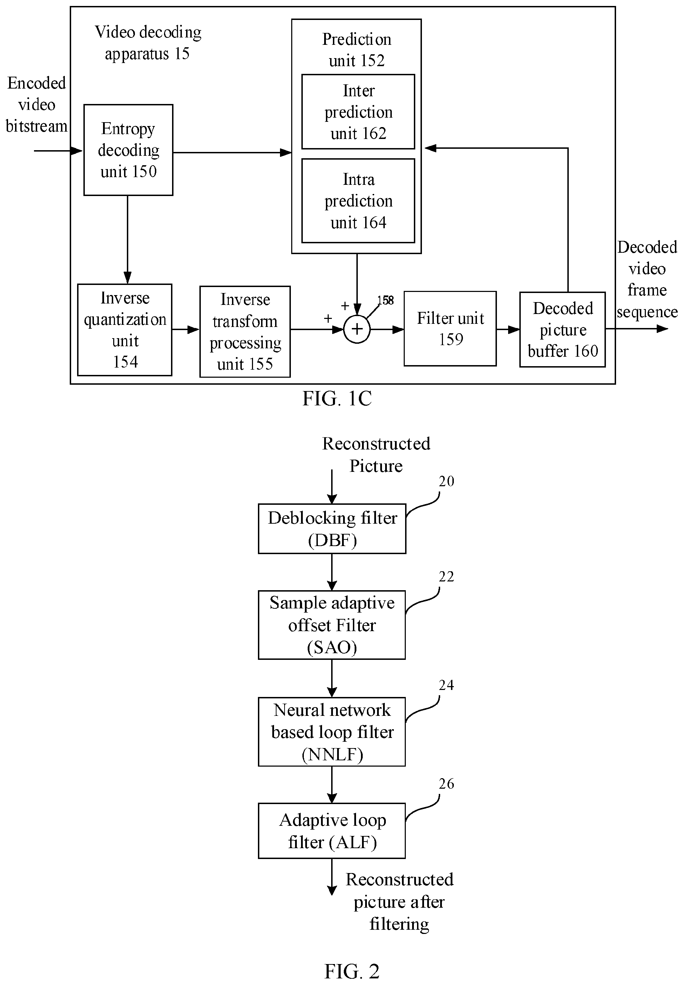

FIG. 1C is a block diagram of an exemplary video decoding apparatus that may be applied to the embodiments of the present disclosure. As illustrated in the FIG. 1C, the video decoding apparatus 15 includes the following units.

An entropy decoding unit 150, and the entropy decoding unit 150 is configured to perform entropy decoding on received encoded bitstream, to extract syntax elements, quantized coefficient blocks, motion information of PUs, or the like. A prediction unit 152, an inverse quantization unit 154, an inverse transform processing unit 156, a reconstruction unit 158 and a filter unit 159 may all perform corresponding operations based on the syntax elements extracted from the bitstream.

An inverse quantization unit 154, and the inverse quantization unit 154 is configured to perform inverse quantization on a quantized coefficient block associated with the TU.

An inverse transform processing unit 156, and the inverse transform processing unit 156 is configured to apply one or more inverse transforms to the inverse quantized coefficient block, to generate a reconstructed residual block of the TU.

A prediction unit 152, and the prediction unit 152 includes an inter prediction unit 162 and an intra prediction unit 164. If intra prediction encoding is adopted by the current block, the intra prediction unit 164 determines an intra prediction mode of the PU based on the syntax element decoded from the bitstream, and performs intra prediction according to reconstructed reference information adjacent to the current block acquired from the decoded picture buffer 160. If inter prediction encoding is adopted by the current block, inter prediction unit 162 determines a reference block of the current block based on motion information of the current block and the corresponding syntax element, and performs inter prediction based on the reference blocks acquired from decoded picture buffer 160.

A reconstruction unit 158 (represented by a circle with a plus sign behind the inverse transform processing unit 155 in the FIG. 1C), and the reconstruction unit 158 is configured to obtain a reconstructed picture based on the reconstructed residual block associated with the TU and a prediction block of the current block generated by performing intra prediction or inter prediction through the prediction unit 152.

A filter unit 159, and the filter unit 159 is configured to perform in loop filtering on the reconstructed picture.

A decoded picture buffer 160, and the decoded picture buffer 160 is configured to store the reconstructed picture after in loop filtering as a reference picture for subsequent motion compensation, intra prediction, inter prediction, or the like. The filtered reconstructed picture after in loop filtering may also be output as decoded video data for presentation on a display apparatus.

In other embodiments, the video decoding apparatus 15 may include more, fewer or different functional components, for example, in some cases, the inverse transform processing unit 155 may be cancelled.

Herein, the current block may be a block-level encoding unit such as a current coding tree unit (CTU), a current coding unit (CU), or a current prediction unit (PU) in the current picture.

Based on the above video encoding apparatus and video decoding apparatus, the following basic encoding and decoding processes may be performed. At the encoding side, one frame of the picture is partitioned into blocks, intra prediction or inter prediction or other algorithms is performed on the current block to generate a prediction block of the current block, an original block of the current block is used to subtract the prediction block to obtain a residual block, transform and quantization are performed on the residual block to obtain a quantization coefficient, and entropy encoding is performed on the quantization coefficient to generate a bitstream. At the decoding side, intra prediction or inter prediction is performed on the current block to generate a prediction block of the current block. In addition, inverse quantization and inverse transform are performed on quantization coefficients that are obtained by decoding the bitstream, to obtain a residual block. The prediction block is added with the residual block to obtain a reconstructed block, and reconstructed blocks form a reconstructed picture. In loop filtering is performed on the reconstructed picture based on a picture or based on a block, to obtain a decoded picture. The encoding side also obtains a decoded picture through operations similar to those operations at the decoding side, and the decoded picture obtained at the encoding side is also referred to as a reconstructed picture after in loop filtering. The decoded picture after in loop filtering may be used as a reference frame for inter prediction for subsequent frames. Block partition information, mode information (such as prediction, transform, quantization, entropy coding or in loop filtering) and parameter information determined at the encoding side may be written into the bitstream. The decoding side determines the block partition information, mode information (such as prediction, transform, quantization, entropy coding or in loop filtering) and parameter information used at the encoding side through decoding the bitstream or performing analysis according to set information, thereby ensuring that the decoded picture obtained at the encoding side is the same as the decoded picture obtained at the decoding side.

Although a block-based hybrid encoding framework is taken as an example above, the embodiments of the present disclosure are not limited thereto. With the development of technology, one or more modules in the framework and one or more steps in the process may be replaced or optimized.

The embodiments of the present disclosure relate to, but are not limited to, filter units (the filter unit may also be referred to as an in loop filtering module) and corresponding in loop filtering methods at the above encoding side and decoding side.

In an embodiment, the filter units at the encoding side and the decoding side include tools such as a deblocking filter (DBF) 20, a sample adaptive offset (SAO) filter 22 and an adaptive loop filter (ALF) 26. A neural network based loop filter (NNLF) 26 is also included between the SAO and the ALF, as illustrated in FIG. 2. The filter unit performs loop filtering on the reconstructed picture, which may compensate for the distortion information and provide a better reference for subsequent encoding samples.

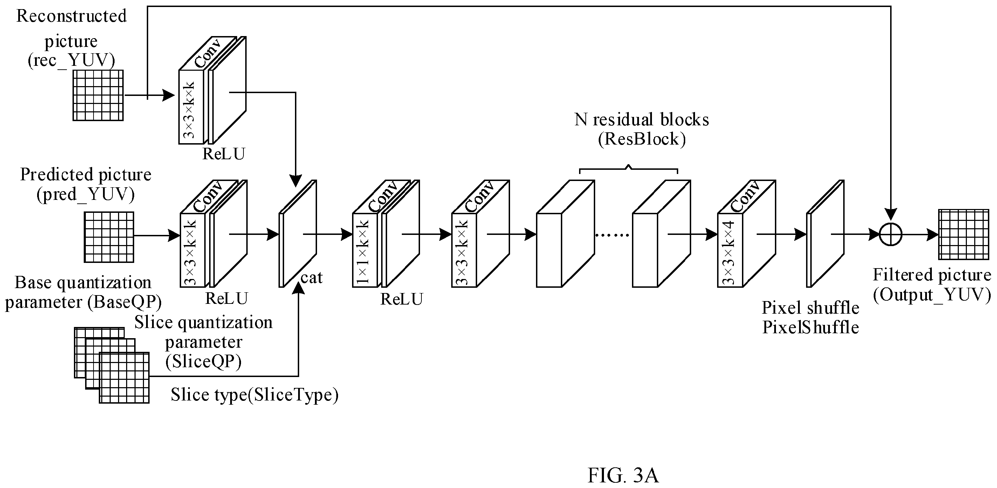

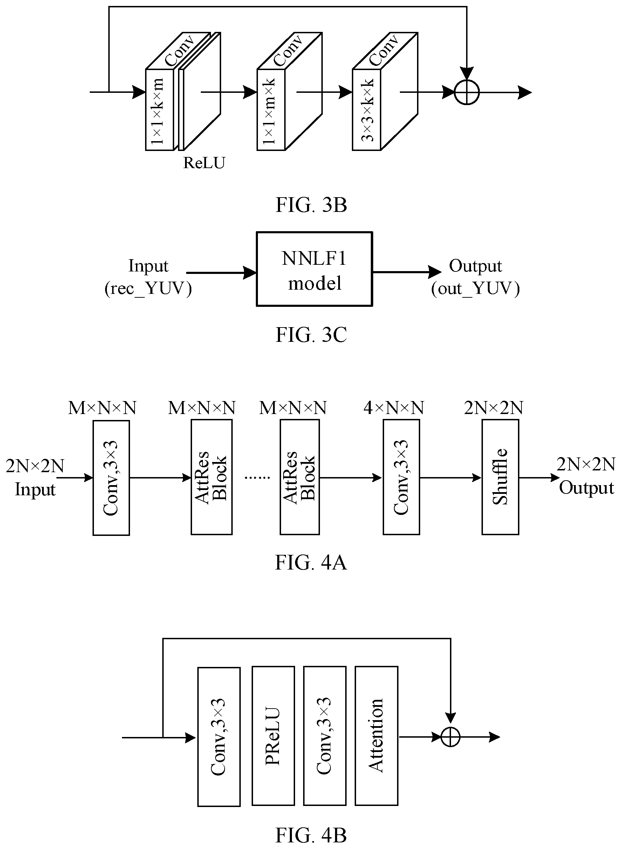

In an exemplary embodiment, a neural network based loop filtering NNLF solution is provided, and the model used adopts a filter network illustrated in FIG. 3A. The NNLF is denoted as NNLF1 herein, and the filter for performing NNLF1 is referred to as the filter for NNLF1. As illustrated in FIG. 3A, the backbone network of the filter network includes multiple sequentially connected residual blocks (ResBlocks) connected in sequence, and also includes convolutional layers (represented by Conv in FIG. 3A), activation function layers (such as ReLU in FIG. 3A), a concat layer (represented by Cat in FIG. 3A), and a pixel shuffle layer (represented by PixelShuffle in FIG. 3A). The structure of each residual block is illustrated in FIG. 3B, which includes a convolutional layer with a convolution kernel size of $1\times1$, a ReLU layer, a convolutional layer with a convolution kernel size of $1\times1$, and a convolutional layer with a convolution kernel size of $3\times3$, which are connected sequentially.

As illustrated in FIG. 3A, the input of the filter for NNLF1 includes luma information (i.e., Y component) and chroma information (i.e., U and V components) of the reconstructed picture (rec_YUV), and various auxiliary information, such as luma information and chroma information of the predicted picture (pred_YUV), QP information and frame type information. The QP information includes default Base Quantization Parameter (BaseQP) in the encoding profile and Slice Quantization Parameter (SliceQP) of the current slice. The frame type information includes slice types (SliceType), that is, the type of the frame to which the current slice belongs. The output of the model is the filtered picture (output_YUV) after NNLF1. The filtered picture output by the filter for NNLF1 may also be used as the reconstructed picture input to the subsequent filter.

One model is used for NNLF1 to perform filtering on the YUV components of the reconstructed picture (rec_YUV), to output the YUV components of the filtered picture (out_YUV), as illustrated in FIG. 3C, in which auxiliary input information such as the YUV components of the predicted picture is omitted in FIG. 3C. The filter network of this model has a skip connection branch between the input reconstructed picture and the output filtered picture, as illustrated in FIG. 3A.

In another exemplary embodiment, another NNLF solution is provided and denoted as NNLF2. Two models are used for NNLF2, in which one model is used to perform filtering on the luma component of the reconstructed picture, and the other model is used to perform filtering on the two chroma components of the reconstructed picture. The two models may adopt the same filter network, and there is also a skip connection branch between the reconstructed picture input to the filter for NNLF2 and the filtered picture output by the filter for NNLF2. As illustrated in FIG. 4A, the backbone network of the filter network includes multiple sequentially connected residual blocks (AttRes Block) with the attention mechanism, convolutional layers (Conv $3\times3$) for implementing feature mapping, and a shuffle layer (Shuffle). The structure of each residual block with the attention mechanism is illustrated in FIG. 4B, which includes a convolutional layer (Conv 3×3), an activation layer (PReLU), a convolutional layer (Conv 3×3) and an attention layer (Attention), which are connected sequentially. M represents the number of feature maps, and N represents the number of samples in one dimension.

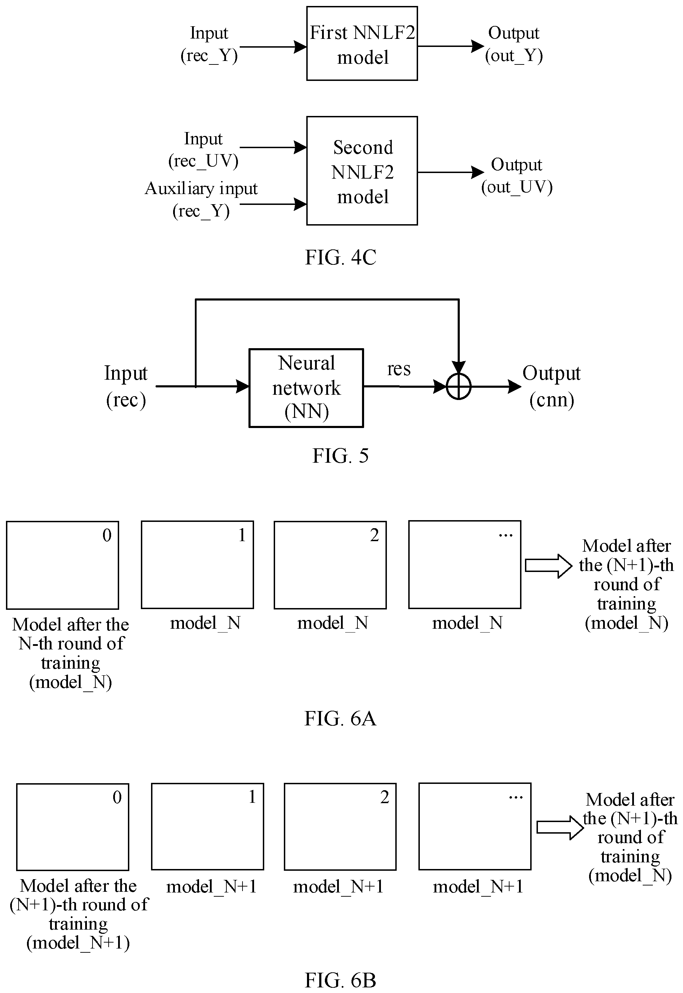

A first model of NNLF2 used to perform filtering on the luma component of the reconstructed picture is illustrated in FIG. 4C. The input information of the first model includes the luma component (rec_Y) of the reconstructed picture, and the output is the luma component (out_Y) of the filtered picture, in which auxiliary input information such as the luma component of the predicted picture is omitted in FIG. 4C. A second model of NNLF2 used to perform filtering on the two chroma components of the reconstructed picture is also illustrated in FIG. 4C. The input information of the second model includes the two chroma components (rec_UV) of the reconstructed picture, and the luma component (rec_Y) of the reconstructed picture which is taken as auxiliary input information; and the output of the second model is the two chroma components (out_UV) of the filtered picture. The first model and second model may also include other auxiliary input information, such as QP information, block partition picture, deblocking filtering boundary strength information.

The above NNLF1 and NNLF2 solutions in neural network based video coding (NNVC) may be implemented by neural network based common software (NCS), in which the NCS is taken as a baseline tool in the reference software testing platform of NNVC, that is, the baseline NNLF.

In the field of deep learning, the concept of residual learning has been proposed, which enables a network to focus on learning residual information of a picture through a simple skip connection structure from an input to an output, so as to improve learning ability and prediction performance of the network. A basic structure of a residual network (ResNet) is illustrated in FIG. 5. NNLF1 and NNLF2 draw on the concept of residual learning, as illustrated in FIG. 5, in which a filter network includes a neural network (NN) and a skip connection branch from a reconstructed picture input to the filter to a filtered picture output by the filter. The filtered picture output by NNLF1 and NNLF2 is represented as cnn=rec+res, where rec represents the input reconstructed picture, and res represents the residual picture output by the neural network. The neural network includes other parts in the filter network except the skip connection branch, and the neural network has a function of predicting residual information. NNLF1 and NNLF2 predict residual information (i.e., the residual picture) of the input reconstructed picture relative to an original picture through the neural network, and then superimpose the residual picture on the input reconstructed picture (i.e., add with the reconstructed picture), to obtain the filtered picture output by the filter. In this way, the quality of the filtered picture may be made closer to the original picture.

In video encoding, inter prediction technology enables a current frame to refer to picture information of previous frame, so as to improve the encoding performance, however, encoding effect of the previous frame will also affect that of subsequent frame. In the NNLF1 and NNLF2 solutions, in order to enable the filter network to adapt to influence of the inter prediction technology, training processes of the model includes an initial training stage and an iterative training stage, and adopts a way of multi-round training. In the initial training stage, a model to be trained has not been deployed in the coder yet, and the first round of training is performed on the model by using collected sample data of the reconstructed picture, to obtain a model after the first round of training. In the iterative training stage, all models have been deployed in the coder. Firstly, the model after the first round of training is deployed in the coder, the sample data of the reconstructed picture is recollected, and the second round of training is performed on the model after the first round of training to obtain the model after the second round of training. Then, the model after the second round of training is deployed in the coder, the sample data of the reconstructed picture is recollected, and the third round of training is performed on the model after the second round of training to obtain the model after the third round of training; and so on iteratively. Finally, encoding testing is performed on the models after each round of training on the validation set, to find the model with the best encoding performance for actual deployment.

However, with the multi-round training operation, there is still a certain lag between training and encoding testing. The analysis is as follows: a schematic diagram of the (N+1)-th round of training is illustrated in FIG. 6A. As illustrated in FIG. 6A, when the (N+1)-th round of training is performed, the model after the N-th round of training (model_N) is deployed in the coder, and training data of multiple frames of reconstructed pictures are collected, in which the boxes labeled with 0, 1, 2, ... in the figure represent the reconstructed pictures of the 1st frame, the 2nd frame, the 3rd frame, .... The model after the (N+1)-th round of training is obtained by training. It is assumed that the performance of the model_N+1 after encoding testing is the best, and training is completed.

When encoding testing is performed on the model_N+1, the model (model_N+1) is deployed in the encoder or decoder. As illustrated in FIG. 6B, the previous frame referenced by the current frame using inter prediction encoding is generated by performing loop filtering based on the model_N+1, and there is a lag in training relative to testing. However, for the model_N+1, its applicable environment is the environment of the (N+1)-th round of training, in which the previous frame referenced by the current frame is generated by performing loop filtering using the model_N, which is different from the environment of performing encoding testing on the model_N+1. Since the performance of the model_N+1 is better than that of the model_N, when encoding testing is performed, after performing filtering on the previous frame referenced by the current frame by using the model_N+1, the performance of the previous frame is further improved, so that the quality of the input reconstructed picture is improved (the residual between the input reconstructed picture and the original picture becomes smaller) when encoding testing is performed on the model_N+1, which is different from the expected quality under the training environment. However, the model_N+1 still predicts the residual according to its trained ability, which may cause the residual output by the neural network in the model_N+1 to be relatively large. At present, there is no solution to try to offset the residual.

Herein, for the residual value of the residual picture, the residual of the residual picture become smaller by performing residual offset means that the residual value in the residual picture is closer to 0, that is, the absolute value of the residual value becomes smaller, such as 3 becomes 2, -3 becomes -2, but does not means such change of -3 becoming -4. The residual becoming smaller is for the residual picture as a whole, which may be that the absolute values of the residual values of some pixels become smaller and the residual values of some pixels remains unchanged, or may be that the absolute values of all non-zero residual values become smaller except for the zero-value residual values not changing, or may be that the absolute values of some non-zero residual values becomes smaller. For example, the residual values in the value interval [1, 2] and [-1, -2] may remain unchanged, while the absolute values of the residual values greater than or equal to 3 and less than or equal to -3 may become smaller.

An embodiment of the present disclosure provides a neural network based loop filtering method, which is applied to a filter for NNLF at an encoding side. The filter for NNLF includes a neural network and a skip connection branch from an input to an output of the filter for NNLF, and the method includes the following operations.

In S110, a reconstructed picture is input into the neural network, to obtain a residual picture output by the neural network.

In S120, a rate distortion cost $cost_1$ of performing NNLF on the reconstructed picture using a first mode is calculated, and a rate distortion cost $cost_2$ of performing NNLF on the reconstructed picture using a second mode is calculated.

The first mode is an NNLF mode that residual offset is not performed on the residual picture, and the second mode is an NNLF mode that residual offset is performed on the residual picture.

In S130, the first mode is selected to perform NNLF on the reconstructed picture responsive to that the $cost_1$ is less than the $cost_2$ (i.e., $cost_1<cost_2$); the second mode is selected to perform NNLF on the reconstructed picture responsive to that the $cost_2$ is less than the $cost_1$ (i.e., $cost_2<cost_1$); or the first mode or the second mode is selected to perform NNLF on the reconstructed picture responsive to that the $cost_1$ is equal to the $cost_2$ (i.e., $cost_1=cost_2$).

In the neural network based loop filtering method of the embodiment, the encoding side may select a mode with the lower rate distortion cost from the mode with residual offset and the mode without residual offset to perform NNLF, to compensate for the performance loss caused by the lag in training of NNLF mode relative to encoding testing to a certain extent, thereby improving the effect of NNLF and enhancing the encoding performance.

Unless otherwise limited, residual offset herein refers to residual offset performed on the residual picture when neural network based loop filtering is performed on the reconstructed picture.

In an exemplary embodiment of the present disclosure, the reconstructed picture is a reconstructed picture of a current frame or a current slice or a current block, and may also be a reconstructed picture of other coding units. Herein, the reconstructed picture for performing NNLF may be coding units at different levels, such as picture-level (including frame and slice), or block-level.

In an exemplary embodiment of the present disclosure, a residual of the residual picture becomes smaller by performing residual offset.

In an exemplary embodiment of the present disclosure, the operation that the rate distortion cost $cost_1$ of performing NNLF on the reconstructed picture using the first mode is calculated includes: adding the residual picture and the reconstructed picture, to obtain a first filtered picture; and calculating the $cost_1$ according to a difference between the first filtered picture and a corresponding original picture. In a case where both the reconstructed picture and the residual picture include three components, such as Y component, U component and V component, the $cost_1$ may be obtained by calculating sum of squared differences (SSDs) between the first filtered picture and the original picture on the three components and performing weighted sum on the SSDs on the three components. In the present embodiment, the operation that the first mode is selected to perform NNLF on the reconstructed picture includes: taking the first filtered picture obtained by adding the residual picture and the reconstructed picture as a filtered picture that is output after NNLF is performed on the reconstructed picture. In the present embodiment, when NNLF is performed on the reconstructed picture using the first mode, the above filtering method of NNLF1 or NNLF2 may be adopted, or other filtering methods that do not perform residual offset on the residual picture may also be adopted.

In an exemplary embodiment of the present disclosure, the operation that the rate distortion cost $cost_2$ of performing NNLF on the reconstructed picture using the second mode is calculated includes:

performing residual offset on the residual picture according to each of set residual offset modes, and adding with the reconstructed picture, to obtain a respective second filtered picture; calculating a respective rate distortion cost according to a difference between the respective second filtered picture and the original picture; and
taking a minimum rate distortion cost among all calculated rate distortion costs as the $cost_2$.

In an example of the present embodiment, in a case where there is one set residual offset mode, one rate distortion cost is calculated, and the rate distortion cost is the $cost_2$. In another example of the present embodiment, in a case where there are multiple set residual offset modes, it is assumed that there are two set residual offset modes, two rate distortion costs are calculated, and the minimum rate distortion cost of the two rate distortion costs is the $cost_2$.

In an example of the present embodiment, the operation of performing residual offset on the residual picture and adding with the reconstructed picture may be the operation that the result obtained by performing residual offset on the residual picture is added with the reconstructed picture. The residual offset mode is that, for example, 1 is subtracted from positive residual values in the residual picture, and 1 is added to negative residual values in the residual picture, that is, the residual value with a value of 0 is not offset (adjusted), so that the residual in the residual picture becomes smaller as a whole. However, in the specific implementation, it is not necessary to calculate in this order, for example, it is also possible to add the residual picture and the reconstructed picture firstly, in which the picture obtained by the addition also includes the residual picture, and then perform residual offset on the residual picture. Taking any pixel in the picture as an example, it is assumed that the value of the pixel in the residual picture (i.e. the residual value) is x, the value of the pixel in the reconstructed picture (i.e. the reconstructed value) is y, and 1 is subtracted from the residual value of the pixel by performing residual offset. When the value of the pixel in the second filtered picture is calculated, the result is the same either by the operation of first subtracting 1 from x and then adding y or by the operation of first adding x to y and then subtracting 1. In other embodiments of the present disclosure, including the embodiments at the decoding side, the specific implementation of performing residual offset on the residual picture (or its components) and adding with the reconstructed picture (or its components) is also the same.

In an example of the present embodiment, both the reconstructed picture and the residual picture include three components, and the operation of calculating the respective rate distortion cost according to the difference between the respective second filtered picture and the original picture includes: calculating SSDs between the respective second filtered picture and the original picture on the three components, and performing weighted sum on the SSDs on the three components, to obtain the respective rate distortion cost.

In an exemplary embodiment of the present disclosure, the set residual offset modes includes one or more of the following types.

A fixed value is added or subtracted to a non-zero residual value in the residual picture, to enable an absolute value of the non-zero residual value to become smaller. For example, 1 is subtracted from the positive residual value in the residual picture, and 1 is added to the negative residual value in the residual picture.

According to an interval in which a non-zero residual value in the residual picture is located, an offset value corresponding to the interval is added or subtracted to the non-zero residual value, to enable an absolute value of the non-zero residual value to become smaller. Where there are multiple intervals, and a larger value in the interval, larger the offset value corresponding to the interval. For example, the residual values in the residual picture that are greater than or equal to 1 and less than or equal to 5 are subtracted by 1, the residual values that are greater than 5 are subtracted by 2, the residual values that are less than or equal to -1 and greater than or equal to -5 are added with 1, and the residual values that are less than -5 are added with 2.

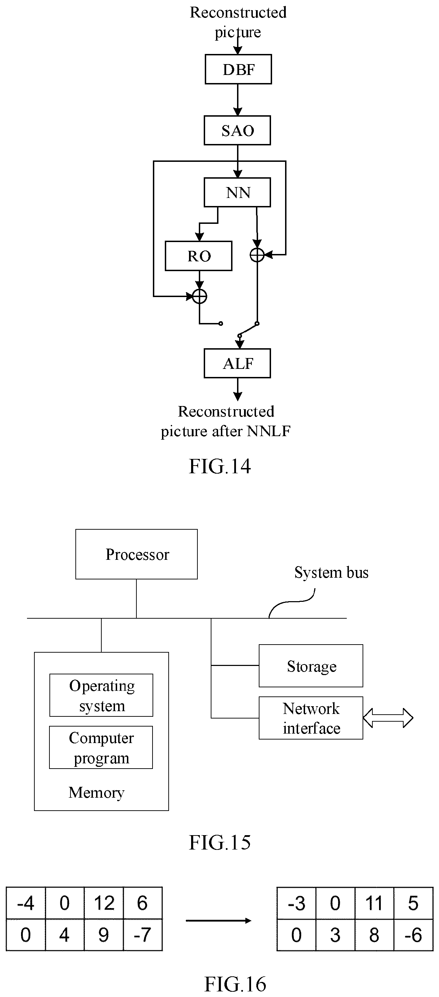

In the above embodiment, the encoding performance is improved by offsetting the residual information output by the filter network. As mentioned above, the residual of the residual picture output by the neural network may be relatively large, and the residual is reduced by performing residual offset, so as to improve the encoding performance. For one residual picture, the residual value of each pixel in the residual picture may be positive or negative; when reducing the residual, the positive residual values may be subtracted by the fixed value (positive number) and the negative residual values may be added to the fixed value, and the residual value with a value of 0 is not offset (adjusted), so that the residual values become smaller as a whole, that is, closer to 0. As illustrated in FIG. 16, it is assumed that the fixed value is (+1), the residual value of each pixel in the original residual picture is illustrated in the left figure, and the residual value of each pixel in the residual picture after performing residual offset is illustrated in the right figure. The residual picture after performing residual offset is superimposed on the input reconstructed picture to obtain the filtered picture, which may also be referred to as the reconstructed picture after performing NNLF. Multiple fixed values may be set to correspond to the multiple residual offset modes. By calculating the respective rate distortion cost of each residual offset mode, the fixed value adopted by a residual offset mode with the minimum rate distortion cost is selected, and an index corresponding to the residual offset mode is encoded into the bitstream for the decoding side to read and process.

In addition to adopting the residual offset mode with the fixed value, other types of residual offset modes may also be adopted. For example, the residual values are segmented according to their magnitude, and offset operations with different precisions are attempted. For example, for a residual value with a larger absolute value, an offset value with a larger absolute value is set; and for a residual value with a smaller absolute value, an offset value with a smaller absolute value is set.

An example pseudo code is as follows.

It is assumed that the residual value corresponding to the current pixel of the current frame is res, and the offset value that needs to be decided is RO_FACTOR. The specific strategy for deriving the offset value is as follows:

```
if (res = 0 )            RO_FACTOR = 0;
else if (0<res<=x1)      RO_FACTOR = a1;
else if (xl<res<=x2)     RO_FACTOR = a2;
else if (x2<res)         RO_FACTOR = a3;
else if (y1<=res<0)      RO_FACTOR = b1;
else if (y2<=res<y1)     RO_FACTOR = b2;
else if (res<y2)         RO_FACTOR = b3.
```

Where {x1, x2, x3} represent positive residual values, {yl, y2, y3} represent negative residual values, and {al, a2, a3} and {b1, b2, b3} are preset candidate fixed values.

The above solutions do not offset (adjust) the 0-value residual values, but search for the interval into which the non-zero residual values fall (a total of 6 intervals are set), to determine the offset (adjust) value to be used.

In the present embodiment, the multiple set residual offset modes may include one type of residual offset mode, or may include multiple types of residual offset modes.

In the above embodiment, the three components in the residual picture are offset uniformly by using the same residual offset mode. Residual offset is performed on the residual picture by using this residual offset mode is an overall optimal result under the premise of uniform offsetting the three components. However, the residual offset mode is not necessarily an optimal residual offset mode for the specific component in the residual picture. In this regard, the determination of whether to separately perform residual offset on each component and the selection of the residual offset mode may be made, so as to further optimize the encoding performance.

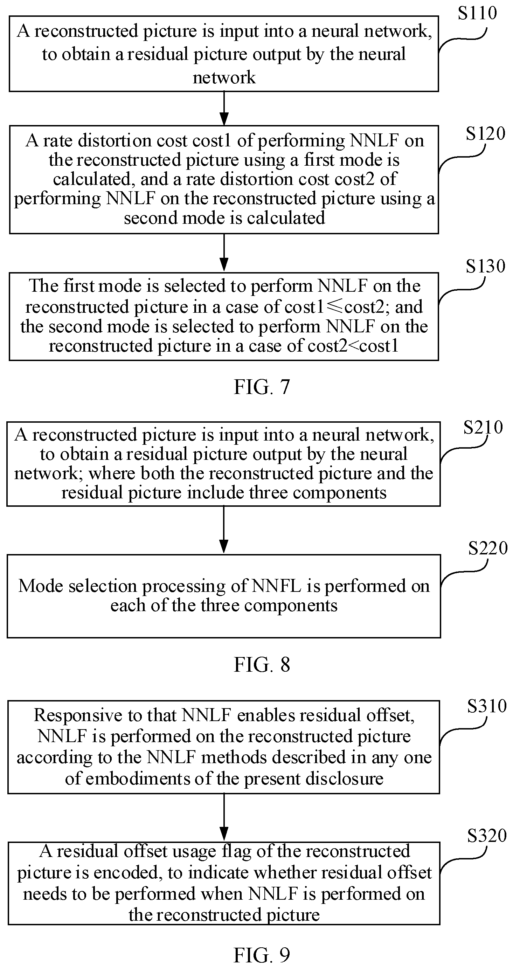

An embodiment of the present disclosure provides a neural network based loop filtering method, which is applied to a filter for NNLF at an encoding side. The filter for NNLF includes a neural network and a skip connection branch from an input to an output of the filter for NNLF, as illustrated in FIG. 8, and the method includes the following operations.

In S210, a reconstructed picture is input into the neural network, to obtain a residual picture output by the neural network; where both the reconstructed picture and the residual picture include three components, such as Y component, U component and V component.

In S210, following processes are performed for each component of the reconstructed picture and the residual picture, where the processes may be referred to as mode selection processes.

A rate distortion cost $cost_1$ of performing NNLF on the component of the reconstructed picture using a first mode is calculated and a rate distortion cost $cost_2$ of performing NNLF on the component of the reconstructed picture using a second mode is calculated, where the first mode is an NNLF mode that residual offset is not performed on the component of the residual picture, and the second mode is an NNLF mode that residual offset is performed on the component of the residual picture.

The first mode is selected to perform NNLF on the component of the reconstructed picture responsive to that the $cost_1$ is less than the $cost_2$ (i.e., cost1<cost2); the second mode is selected to perform NNLF on the component of the reconstructed picture responsive to that the $cost_2$ is less than the $cost_1$ (i.e., cost2<cost1); or the first mode or the second mode is selected to perform NNLF on the reconstructed picture responsive to that the $cost_1$ is equal to the $cost_2$ (i.e., cost1=cost2).

In the present embodiment, mode selection processes may be performed on each component separately, so that the encoding performance may be further optimized based on the above embodiment in which the three components are uniformly offset. Since the correlation operations are performed at the output side of the filter for NNLF, the influence on the computational complexity is not significant.

In an exemplary embodiment of the present disclosure, the reconstructed picture is a reconstructed picture of a current frame or a current slice or a current block.

In an exemplary embodiment of the present disclosure, a residual in the component of the residual picture becomes smaller by performing residual offset.

In an exemplary embodiment of the present disclosure, the operation that the rate distortion cost $cost_1$ of performing NNLF on the component of the reconstructed picture using the first mode is calculated includes: adding the component of the residual picture and the component of the reconstructed picture, to obtain the filtered component; and calculating the $cost_1$ according to a difference between the filtered component and the component of a corresponding original picture. In an example, the difference is represented by SSD, that is, the SSD between the filtered component and the component of the corresponding original picture is taken as the $cost_1$. In other examples, the difference may also be represented as mean square error (MSE), mean absolute error (MAE) and other indicators, which does not limit in the present disclosure. Other embodiments of the present disclosure are the same.

In an example of the embodiment, the operation that the first mode is selected to perform NNLF on the component of the reconstructed picture includes: taking the filtered component obtained by adding the component of the residual picture and the component of the reconstructed picture as the component of a filtered picture that is output after NNLF is performed on the reconstructed picture. In the present embodiment, the component of the filtered picture is obtained by performing NNLF on the component of the reconstructed picture according to the first mode, and no residual offset is performed on the component of the residual picture. Therefore, the component of the filtered picture may be the same as the component of the filtered picture obtained by the NNLF solution that no residual offset is performed (such as NNLF1 or NNLF2).

In an exemplary embodiment of the present disclosure, the operation that the rate distortion cost $cost_2$ of performing NNLF on the component of the reconstructed picture using the second mode is calculated includes:

> performing residual offset on the component of the residual picture according to each of set residual offset modes for the component, and adding with the component of the reconstructed picture, to obtain the respective filtered component; and calculating a respective rate distortion cost of the component according to a difference between the respective filtered component and the component of a corresponding original picture, for example, the SSD between the filtered component and the component of the corresponding original picture is taken as the rate distortion cost of the component; and
> taking a minimum rate distortion cost among all calculated rate distortion costs of the component as the $cost_2$ of the component; where there are one or more set residual offset modes for the component.

In an example of the present embodiment, the operation that the second mode is selected to perform NNLF on the component of the reconstructed picture includes:
taking the filtered component obtained by performing residual offset on the component of the residual picture according to a residual offset mode corresponding to the $cost_2$ of the component and adding with the component of the reconstructed picture, as the component of a filtered picture that is output after NNLF is performed on the reconstructed picture.

In an example of the present embodiment, the operation of performing residual offset on the component of the residual picture and adding with the component of the reconstructed picture may be the operation that the result obtained by performing residual offset on the component of the residual picture is added with the component of the reconstructed picture. However, in the specific implementation, it is not necessary to calculate in this order.

In an example of the present embodiment, set residual offset modes for the three components are the same or different. For example, the set residual offset mode for the Y component is to subtract 1 from the positive residual value and add 1 to the negative residual value in the residual picture; and the set residual offset mode for the U component and the V component is to subtract 1 from the residual value greater than 2 and add 1 to the residual value less than -2 in the residual picture.

In an example of the embodiment, set residual offset modes for at least one of the three components include one or more of following types:

> adding or subtracting a fixed value to a non-zero residual value in the residual picture, to enable an absolute value of the non-zero residual value to become smaller; or
> adding or subtracting, according to an interval in which a non-zero residual value in the residual picture is located, an offset value corresponding to the interval to the non-zero residual value, to enable an absolute value of the non-zero residual value to become smaller; where there are a plurality of intervals, and a larger value in the interval, larger the offset value corresponding to the interval.

An embodiment of the present disclosure further provides a video encoding method, which is applied to a video encoding apparatus and includes: performing following processes when NNLF is performed on a reconstructed picture, as illustrated in FIG. 8.

In S310, responsive to that NNLF enables residual offset, NNLF is performed on the reconstructed picture according to the NNLF methods described in any one of embodiments of the present disclosure.

In S320, a residual offset usage flag of the reconstructed picture is encoded, to indicate whether residual offset needs to be performed when NNLF is performed on the reconstructed picture.

In the embodiments of the present disclosure, when neural network based loop filtering is performed on the reconstructed picture, the residual picture may be offset (adjusted) or not offset (adjusted) according to the rate distortion cost, so as to compensate for the performance loss caused by the lag in training of NNLF mode relative to encoding testing, thereby improving the encoding performance.

In an exemplary embodiment of the present disclosure, the residual offset usage flag is a picture-level syntax element or a block-level syntax element.

In an exemplary embodiment of the present disclosure, it is determined that NNLF enables residual offset responsive to that one or more of following conditions are met:

decoding a sequence-level residual offset enabled flag, and determining that NNLF enables residual offset according to the sequence-level residual offset enabled flag; or

decoding a picture-level residual offset enabled flag, and determining that NNLF enables residual offset according to the picture-level residual offset enabled flag.

In addition to the above conditions, other conditions may also be added. For example, a condition that a frame in which the input reconstructed picture is located is an inter encoded frame is taken as a necessary condition for NNLF to allow residual offset, or the like.

In other embodiments of the present disclosure, residual offset of NNLF may also be enabled all the time. In this case, there is no need to determine whether residual offset is enabled for NNLF through a flag, and the default is that NNLF enables residual offset.

In an exemplary embodiment of the present disclosure, the method further includes: responsive to that it is determined that NNLF disables residual offset, skipping encoding of the residual offset usage flag, and adding the reconstructed picture input into the neural network to the residual picture output by the neural network, to obtain a filtered picture that is output after NNLF is performed on the reconstructed picture. That is, at this time, filtering on the reconstructed picture may be implemented using NNLF without residual offset.

In an exemplary embodiment of the present disclosure, the method is to perform NNLF on the reconstructed picture according to any of the above embodiments of uniformly performing residual offset on the three components of the residual picture. A number of residual offset usage flags roflags of the reconstructed picture is one; responsive to that the first mode is selected to perform NNLF on the reconstructed picture, the roflag is set to a value (e.g. 0) indicating that residual offset does not need to be performed; and responsive to that the second mode is selected to perform NNLF on the reconstructed picture, the roflag is set to a value (e.g. 1) indicating that residual offset needs to be performed.

In an example of the present embodiment, the method further includes: responsive to that the roflag is set as the value indicating that residual offset needs to be performed and there are multiple set residual offset modes, continuing to encode an index of residual offset mode of the reconstructed picture, and the index of the residual offset mode is used to indicate a residual offset mode to be based when residual offset is performed. For example, when there are three set residual offset modes, the index of residual offset mode may be a 2-bit flag. The value of the flag being 0, 1 or 2 represents the three residual offset modes, respectively. The correspondence between the value of the flag and the residual offset mode is agreed in advance (for example, defined in the standard or protocol) at the encoding side and the decoding side.

In the present embodiment, two flags (i.e., the residual offset usage flag and the index of residual offset mode) are adopted to indicate whether residual offset needs to be performed and the residual offset mode to be based when residual offset is performed (when there are the multiple set residual offset modes), respectively. However, in another exemplary embodiment of the present disclosure, in a case where there are the multiple set residual offset modes, the residual offset usage flag is also used to indicate the residual offset mode to be based when residual offset is performed, that is, in the present embodiment, the residual offset usage flag is used to simultaneously indicate whether residual offset needs to be performed and the residual offset mode to be based when residual offset is performed. For example, in a case where there are three set residual offset modes, a 2-bit residual offset usage flag (roflag) is used, in which the four values of the roflag may indicate that residual offset does not need to be performed, residual offset is performed using the first residual offset mode, residual offset is performed using the second residual offset mode, and residual offset is performed using the third residual offset mode, respectively.

In a case where there are three set residual offset modes and residual offset does not need to be performed, the embodiment that two flags are used only needs to encode one 1-bit flag, that is, the residual offset usage flag, and does not need to encode the index of residual offset mode; and while the embodiment that one flag is used needs to encode one 2-bit residual offset usage flag. In a case where there are three set residual offset mode and residual offset needs to be performed, the embodiment that two flags are used needs to encode one 1-bit residual offset usage flag and one 2-bit the index of residual offset mode, and while the embodiment that one flag is used needs to encode one 2-bit residual offset usage flag.

In an exemplary embodiment of the present disclosure, the method is to perform NNLF on the reconstructed picture according to any of the above embodiments of respectively performing residual offset on the three components of the residual picture. A number of residual offset usage flags roflag(j) of the reconstructed picture is three, j being 1, 2 and 3, and the roflag(j) is used to indicate whether residual offset needs to be performed when NNLF is performed on a j-th component of the reconstructed picture; responsive to that the first mode is selected to perform NNLF on the j-th component of the reconstructed picture, the roflag(j) is set to a value (e.g., 0) indicating that residual offset does not need to be performed; and responsive to that the second mode is selected to perform NNLF on the j-th component of the reconstructed picture, the roflag(j) is set to a value (e.g., 1) indicating that residual offset needs to be performed.

In an example of the embodiment, the method further includes: responsive to that the roflag(j) is set to the value indicating that residual offset needs to be performed and there are multiple set residual offset modes for the j-th component, continuing to encode an index of residual offset mode index(j) of the j-th component of the reconstructed picture, to indicate a residual offset mode to be based when residual offset is performed on the j-th component of the residual picture.

In another exemplary embodiment of the present disclosure, In a case where there are the multiple set residual offset modes for the j-th component, the residual offset usage flag of the j-th component is also used to indicate the residual offset mode to be based when residual offset is performed, that is, in the present embodiment, the residual offset usage flag of the j-th component is used to simultaneously indicate whether residual offset needs to be performed and the residual offset mode to be based when residual offset is performed.

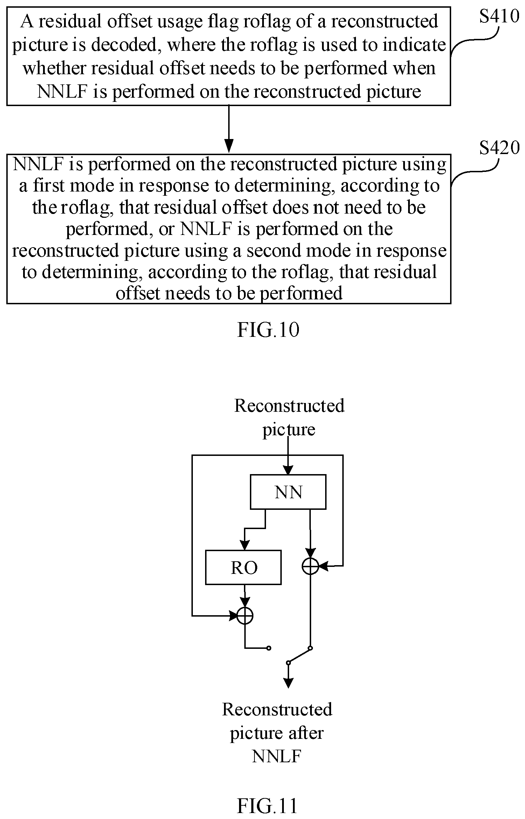

An embodiment of the present disclosure further provides a neural network based loop filtering method, which is applied to a filter for NNLF at a decoding side. The filter for NNLF includes a neural network and a skip connection branch from an input to an output of the filter for NNLF, as illustrated in FIG. 10, and the method includes the following operations.

In S410, a residual offset usage flag roflag of a reconstructed picture is decoded, where the roflag is used to indicate whether residual offset needs to be performed when NNLF is performed on the reconstructed picture.

In S420, NNLF is performed on the reconstructed picture using a first mode in response to determining, according to the roflag, that residual offset does not need to be performed, or NNLF is performed on the reconstructed picture using a second mode in response to determining, according to the roflag, that residual offset needs to be performed.

Where the first mode is an NNLF mode that residual offset is not performed on a residual picture output by the neural network, and the second mode is an NNLF mode that residual offset is performed on the residual picture.

FIG. 11 is a schematic diagram of performing NNLF on the reconstructed picture at the decoding side according to the present embodiment. As illustrated in FIG. 11, there are two paths of NNLF, in which one path is used to represent the residual picture output by the neural network (NN) being added with the reconstructed picture as the filtered picture output by the NNLF; and the other path is used to represent that residual offset needs to be performed on the residual picture (RO in the figure represents a residual offset module, which is used to perform residual offset) and add with the reconstructed picture. The selection of the two paths is determined according to the decoded residual offset usage flag. In the present embodiment, mode selection is performed at the NNLF output side, and the operation of decoding the flag may be performed before the operation of obtaining the filtered picture, but is not limited to thereof.

In the present embodiment, the neural network based loop filtering method selects a better mode from two modes with and without residual offset by decoding the residual offset usage flag, which may enhance the filtering effect of NNLF and improve the quality of the decoded picture.

In an exemplary embodiment of the present disclosure, the roflag may adopt a 1-bit flag, and whether residual offset needs to be performed may be indicated according to the value of the roflag. For example, when the value of the roflag is 1, it is determined that residual offset needs to be performed, and when the value of roflag is 0, it is determined that residual offset does not need to be performed. Other embodiments of the present disclosure are the same.

In an exemplary embodiment of the present disclosure, a residual of the residual picture becomes smaller by performing residual offset.

In an exemplary embodiment of the present disclosure, the reconstructed picture is a reconstructed picture of a current frame or a current slice or a current block.

In an exemplary embodiment of the present disclosure, the residual offset usage flag is a picture-level syntax element or a block-level syntax element.

In an exemplary embodiment of the present disclosure, the operation that NNLF is performed on the reconstructed picture using the first mode includes: adding the residual picture output by the neural network and a reconstructed picture input into the neural network, to obtain a filtered picture that is output after NNLF is performed on the reconstructed picture. The operation that NNLF is performed on the reconstructed picture using the second mode includes: performing residual offset on the residual picture according to one of set residual offset modes, and adding with the reconstructed picture, to obtain a filtered picture that is output after NNLF is performed on the reconstructed picture.

In an example of the present embodiment, where in a case where there are multiple set residual offset methods, the operation of performing residual offset on the residual picture according to one of the set residual offset modes includes: continuing to decode an index of residual offset mode of the reconstructed picture, where the index is used to indicate a residual offset mode to be based when residual offset is performed, and performing residual offset on the residual picture according to a residual offset mode indicated by the index.

In the present embodiment, two flags are used to indicate whether residual offset needs to be performed and the residual offset mode to be based when residual offset is performed, respectively. In another exemplary embodiment, in a case where there are the multiple set residual offset modes, the encoding side uses one flag, that is, the residual offset usage flag (roflag), to simultaneously indicate whether residual offset needs to be performed and the residual offset mode to be based when residual offset is performed. At this time, the decoding side continues to determine the residual offset mode to be based when residual offset is performed according to the roflag of the reconstructed picture, and performs residual offset on the residual picture according to the determined residual offset mode.

In an exemplary embodiment of the present disclosure, the set residual offset modes include one or more of the following types:

adding or subtracting a fixed value to a non-zero residual value in the residual picture, to enable an absolute value of the non-zero residual value to become smaller; or

adding or subtracting, according to an interval in which a non-zero residual value in the residual picture is located, an offset value corresponding to the interval to the non-zero residual value, to enable an absolute value of the non-zero residual value to become smaller; where there are a plurality of intervals, and a larger value in the interval, larger the offset value corresponding to the interval.

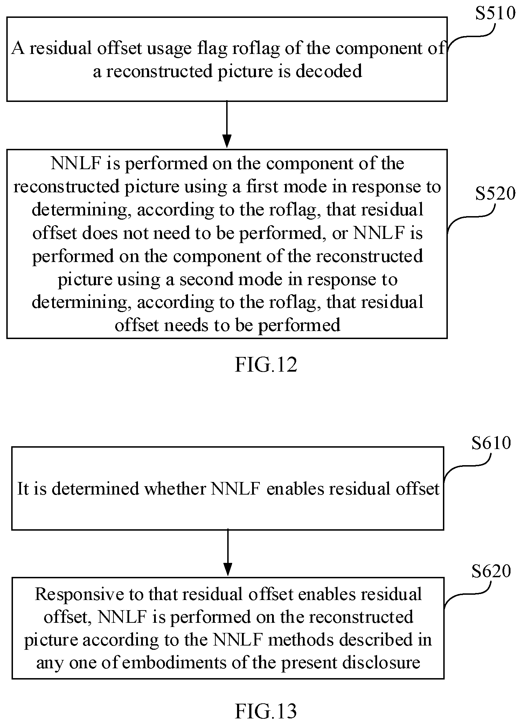

An embodiment of the present disclosure further provides a neural network based loop filtering (NNLF) method, which is applied to a filter for NNLF at a decoding side. The filter for NNLF includes a neural network and a skip connection branch from an input to an output of the filter for NNLF, and the method includes: as illustrated in FIG. 12, when NNLF is performed on a reconstructed picture including three components input to the neural network, performing following processes for each component of the reconstructed picture.

In S510, a residual offset usage flag roflag of the component of the reconstructed picture is decoded, where the roflag is used to indicate whether residual offset needs to be performed when NNLF is performed on the component of the reconstructed picture.

In S520, NNLF is performed on the component of the reconstructed picture using a first mode in response to determining, according to the roflag, that residual offset does not need to be performed, or NNLF is performed on the component of the reconstructed picture using a second mode in response to determining, according to the roflag, that residual offset needs to be performed.

Where the first mode is an NNLF mode that residual offset is not performed on the component of a residual picture output by the neural network, and the second mode is an NNLF mode that residual offset is performed on the component of the residual picture.

According to the neural network based loop filtering method of the present embodiment, a better mode for each component is selected from the two NNLF modes with and without residual offset to perform NNLF on each component by decoding the residual offset usage flag, which may further enhance the filtering effect of NNLF and improve the quality of the decoded picture, compared to the uniform mode selection for the multiple components.

In an exemplary embodiment of the present disclosure, a residual in the component of the residual picture becomes smaller by performing residual offset.

In an exemplary embodiment of the present disclosure, the reconstructed picture is a reconstructed picture of a current frame or a current slice or a current block.

In an exemplary embodiment of the present disclosure, the residual offset usage flag is a picture-level syntax element or a block-level syntax element.

In an exemplary embodiment of the present disclosure, the operation that NNLF is performed on the component of the reconstructed picture using the first mode includes: adding the component of the residual picture and the component of the reconstructed picture, to obtain the component of a filtered picture that is output after NNLF is performed on the reconstructed picture.

The operation that NNLF is performed on the component of the reconstructed picture using the second mode includes: performing residual offset on the component of the residual picture according to one of set residual offset modes for the component, and adding with the component of the reconstructed picture, to obtain the component of a filtered picture that is output after NNLF is performed on the reconstructed picture; where there are one or more set residual offset modes for the component.

In an example of the present embodiment, where in a case where there are multiple set residual offset methods for the component, the operation of performing residual offset on the component of the residual picture according to one of the set residual offset modes for the component includes: continuing to decode an index of residual offset mode of the component of the reconstructed picture, where the index is used to indicate a residual offset mode to be based when residual offset is performed; and performing residual offset on the component of the residual picture according to a residual offset mode indicated by the index.

In an example of the present embodiment the picture header is illustrated in the following table:

| picture_header( ) { | Descriptor |
|---|---|
| ... ... | ... ... |
| if(ro_enable_flag) { | |
| for (compIdx=0; compIdx<3; compIdx++) { | |
| picture_ro_enable_flag[compIdx] | u(1) |
| | |

(continued)

| | |
|---|---|
| if(picture_ro_enable_flag[compIdx]) { | |
| picture_ro_index[compIdx] | ue(v) |
| } | |
| } | |
| } | |
| ... ... | |
| } | |
| | ... ... |

In the table, ro_enable_flag represents the sequence-level residual offset enabled flag. In a case where ro_enable_flag is 1, the following semantic is defined:

the residual offset usage flag picture_ro_enable_flag (equivalent to roflag in other embodiments); and
in a case where picture_ro_enable_flag is 1, the following semantic is defined:
the index of residual offset mode picture_ro_index.

The compIdx in the above table represents the sequence number of the color component. For a picture in YUV format, the value of the compIdx is 0/1/2 in general.

In other examples, NNLF may be performed in units of blocks (such as CTUs), and in this case, the residual offset usage flag and the index of residual offset mode are defined as block-level syntax elements.

In the present embodiment, two flags are adopted to indicate whether residual offset needs to be performed on the component and the residual offset mode to be based when residual offset is performed, respectively. In another exemplary embodiment, in a case where there are the multiple set residual offset modes for the component, the encoding side adopts one flag (that is, the residual offset usage flag (roflag)) to simultaneously indicate whether residual offset needs to be performed on the component and the residual offset mode to be based when residual offset is performed. In this case, the decoding side determines, according to the roflag of the component, the residual offset mode to be based when residual offset is performed, and performs residual offset on the component of the residual picture according to the determined residual offset mode.

In an exemplary embodiment of the present disclosure, set residual offset modes for the three components are same or different; and set residual offset modes for at least one of the three components include one or more of following types:

adding or subtracting a fixed value to a non-zero residual value in the residual picture, to enable an absolute value of the non-zero residual value to become smaller; or
adding or subtracting, according to an interval in which a non-zero residual value in the residual picture is located, an offset value corresponding to the interval to the non-zero residual value, to enable an absolute value of the non-zero residual value to become smaller; where there are multiple intervals, and a larger value in the interval, larger the offset value corresponding to the interval.

An embodiment of the present disclosure further provides a video decoding method, which is applied to a video decoding apparatus and includes: as illustrated in FIG. 13, performing following processes when neural network based loop filtering is performed on a reconstructed picture.

In S610, it is determined whether NNLF enables residual offset.

In S620, responsive to that NNLF enables residual offset, NNLF is performed on the reconstructed picture according to the NNLF methods described in any one of embodiments of the present disclosure applied to the filter for NNLF at the decoding side.

According to the video decoding method of the present embodiment, a better mode for each component is selected from the two NNLF modes with and without residual offset to perform NNLF on each component by decoding the residual offset usage flag, which may further enhance the filtering effect of NNLF and improve the quality of the decoded picture, compared to the uniform mode selection for the multiple components.

In an exemplary embodiment of the present disclosure, where it is determined that NNLF enables residual offset responsive to that one or more of following conditions are met:

decoding a sequence-level residual offset enabled flag, and determining that NNLF enables residual offset according to the sequence-level residual offset enabled flag; or

decoding a picture-level residual offset enabled flag, and determining that NNLF enables residual offset according to the picture-level residual offset enabled flag.

In addition to the above conditions, other conditions may also be added. For example, a condition that a frame in which the input reconstructed picture is located is an inter encoded frame is taken as a necessary condition for NNLF to enable (allow) residual offset, or the like.

In an example of using the sequence-level residual offset enabled flag, the sequence header of the video sequence is illustrated in the following table:

| sequence_header() { | Descriptor |
|---|---|
| ... ... | |
| ro_enable_flag | u(1) |
| | |
| ... ... | |
| } | |

The ro_enable_flag in the table is the sequence-level residual offset enabled flag.

In an exemplary embodiment of the present disclosure, the method further includes: responsive to that NNLF disables residual offset, adding a reconstructed picture input into the neural network and a residual picture output by the neural network, to obtain a filtered picture that is output after NNLF is performed on the reconstructed picture.

In an exemplary embodiment of the present disclosure, the filter for NNLF is arranged after a deblocking filter or a sample adaptive offset filter and before an adaptive loop filter. In an example of the present embodiment, the structure of the filter unit (or referred to as the in loop filter module, referring to FIG. 1B and FIG. 1C) is illustrated in FIG. 14, where DBF in the figure represents the deblocking filter, SAO represents the sample adaptive offset filter, and ALF represents the adaptive loop filter. NN represents a neural network used for loop filtering in the filter for NNLF, and may be the same as the neural network of the filters for NNLF (such as, NNLF1 and NNLF2) that do not perform residual offset. The filter for NNLF further includes a residual offset module (RO) and two skip connection branches from the input of NN to the outputs of two paths, respectively. RO is used to perform residual offset on the residual network output by the neural network. These filters all belong to components of the filter unit of the reconstructed picture. In the process of performing loop filtering, some or all of DBF, SAO and ALF may be disabled. The position where the filter for NNLF is deployed is not limited to the position described in the present embodiment. It is easy to understand that the implementations of the NNLF method in the present disclosure are not limited to its deployment position. In addition, the filters in the filter unit are not limited to those illustrated in FIG. 14, and there may be more or fewer filters, or other types of filters.

An embodiment of the present disclosure provides a neural network based loop filtering method. When loop filtering is performed on the reconstructed picture at the encoder side, processes are performed according to the order of the deployed filters, and when entering NNLF, the following processes are performed.

Step 1, it is determined whether residual offset is enabled in the current sequence according to the sequence-level residual offset enabled flag (ro_enable_flag). Responsive to that ro_enable_flag is "1", which represents that residual offset is enabled for the current sequence for attempt and skips to step 2; and responsive to that ro_enable_flag is "0", which represents that residual offset is disabled for the current sequence and ends the processes (skips subsequent processes).

Step 2, the reconstructed picture of the current frame is input into the neural network of NNLF for prediction, to obtain the residual picture from the output of NNLF, and the residual picture is superimposed on the input reconstructed picture, to obtain the first filtered picture.

Step 3, residual offset is performed on the residual picture and then superimposed with the input reconstructed picture, to obtain the second filtered picture.

Step 4, the rate distortion cost $C_{NNLF}$ is calculated by comparing the first filtered picture and the original picture of the current frame; and the rate distortion cost $C_{RO}$ is calculated by comparing the second filtered picture and the original picture of the current frame.

Step 5, the two costs are compared. Responsive to that $C_{RO}$ is less than $C_{NNLF}$ ($C_{RO} < C_{NNLF}$), the second filtered picture is taken as the filtered picture output by the filter for NNLF, that is, the second mode is selected to perform NNLF on the reconstructed picture. Responsive to that $C_{RO}$ is greater than or equal to $C_{NNLF}$ ($C_{RO} \geq C_{NNLF}$), the first filtered picture is taken as the filtered picture output by the filter, that is, the first mode is selected to perform NNLF on the reconstructed picture.

The calculation formula of the rate distortion cost in the present embodiment is:

$$cost = Wy * SSD(Y) + Wu * SSD(U) + Wv * SSD(V).$$

Where SSD(*) represents the SSD for a certain color component; Wy, Wu and Wv represent the weight values of the SSDs for the Y component, U component and V component, respectively, for example, the values may be taken as 10:1:1 or 8:1:1, or the like.

The calculation formula of SSD is as follows:

$$SSD = \sum_{x=0}^{M} \sum_{y=0}^{N} |rec(x,y) - org(x,y)|^2$$

Where M represents the length of the reconstructed picture of the current frame, N represents the width of the reconstructed picture of the current frame, and rec(x, y) and org(x, y) represent the pixel values of the reconstructed picture and the original picture at the pixel (x, y), respectively.

Step 6, the residual offset usage flag (picture_ro_enable_flag) of the current frame and the index of residual offset mode (picture_ro_index) are encoded into the bitstream.

Step 7, if all blocks in the current frame have been processed, processing on the current frame is terminated, and then the next frame may be continuously loaded for processing. If there are still blocks in the current frame that have not been processed, step 2 is returned.

In the present embodiment, NNLF processing is performed in units of the reconstructed picture of the current frame. In other embodiments, NNLF processing may also be performed based on other coding units such as blocks (such as CTUs) and slices of the current frame.

In the present embodiment, NNLF1 baseline tool is selected as a comparison. On the basis of NNLF1, mode selection processing is performed on inter encoded frames (i.e., non-I frame), and two residual offset modes using the fixed values are set, in which the fixed values are set to 1 and 2, respectively. Under the general test conditions of random access and low delay B configuration, the general sequence specified by the Joint Video Experts Team (JVET) has been tested, and the anchor for the comparison is NNLF1. The results are illustrated in Tables 1 and 2:

Table 1: Performance of the present embodiment comparing to the baseline NNLF1 under the random access configuration

| | Random access Main10 | | | | |
|---|---|---|---|---|---|
| | Over AHG11 reference software (NnlfOption=1) | | | | |
| | Y | U | V | **EncT** | DecT |
| Class A1 | -0.07% | -2.06% | -0.50% | 100% | 100% |
| Class A2 | -0.12% | -0.75% | -0.22% | 101% | 100% |
| Class B | -0.09% | -0.97% | -0.26% | 100% | 102% |
| Class C | -0.08% | -0.65% | -0.34% | 101% | 103% |
| Class E | | | | | |
| **Overall** | -0.09% | -1.06% | -0.32% | 100% | 102% |
| Class D | 0.02% | -0.72% | -0.45% | 99% | 102% |
| Class F | -0.02% | -0.17% | -0.14% | 100% | 101% |

Table 2: Performance of the present embodiment comparing to the baseline NNLF1 under the low delay B configuration

| | Low delay B Main10 | | | | |
|---|---|---|---|---|---|
| | Over AHG11 reference software (NnlfOption=1) | | | | |
| | Y | U | V | EncT | DecT |
| Class A1 | #VALUE! | #VALUE! | #VALUE! | #DIV/0! | #DIV/0! |
| Class A2 | #VALUE! | #VALUE! | #VALUE! | #DIV/0! | #DIV/0! |
| Class B | -0.51% | -1.65% | -0.16% | 100% | 106% |

(continued)

| | Low delay B Main10 | | | | |
|---|---|---|---|---|---|
| | Over AHG11 reference software (NnlfOption=1) | | | | |
| | Y | U | V | EncT | DecT |
| Class C | -0.61% | -1.60% | -0.91% | 99% | 106% |
| Class E | -0.70% | 1.19% | -0.42% | 98% | 127% |
| **Overall** | -0.59% | -1.63% | -0.49% | 99% | 111% |
| Class D | -0.35% | -2.09% | -2.53% | 100% | 104% |
| Class F | -0.11% | -1.91% | -1.16% | 101% | 102% |

The meanings of the parameters in the tables are as follows.

EncT: encoding Time, 10X% represents that after the technology for sorting the reference lines isintegrated, an encoding time is 10X%, compared with the situation of before integration, which means that the encoding time increases by X%.

DecT: decoding Time, 10X% represents that after technology for sorting the reference lines is integrated, the decoding time is 10X% compared with the situation of before integration, which means that the decoding time increases by X%.

ClassAl and Class A2 are test video sequences with a resolution of 3840x2160, ClassB is a test sequence with a resolution of 1920x1080, a resolution of ClassC is 832x480, a resolution of ClassD is 416x240, and a resolution of ClassE is 1280x720; and ClassF are screen content sequences with several different resolutions.

Y, U, and V are the three color components. The columns in which Y, U, and V are located represent the BD-rate (Bjøntegaard-delta rate) indicators of the test results on Y, U, and V. The smaller the value, the better the encoding performance.

By analyzing the data in the two tables, it may be seen that by introducing the optimization method of residual offset, the encoding performance may be further improved on the basis of NNLF1, especially in the chroma component. The influence about residual offset of the present embodiment on the decoding complexity is not significant.

NNLF mode selection may also be performed for an intra encoded frame (I frame) according to the method of the present embodiment.

An embodiment of the present disclosure further provides a bitstream, where the bitstream is generated by the video encoding method described in any one of embodiments of the present disclosure.

An embodiment of the present disclosure further provides a neural network based loop filter, as illustrated in FIG. 15, which includes a processor and a memory storing a computer program. The processor, when executing the computer program, is capable of implementing the neural network based loop filtering methods described in any one of embodiments of the present disclosure. As illustrated in FIG. 15, the processor and the memory are connected via a system bus, and the loop filter may also include other components such as a storage and a network interface.

An embodiment of the present disclosure further provides a video decoding apparatus, illustrated in FIG. 15, which includes a processor and a memory storing a computer program. The processor, when executing the computer program, is capable of implementing the video decoding method described in any one of embodiments of the present disclosure.

An embodiment of the present disclosure further provides a video encoding apparatus, illustrated in FIG. 15, which includes a processor and a memory storing a computer program. The processor, when executing the computer program, is capable of implementing the video encoding method described in any one of embodiments of the present disclosure.

The processor of the above embodiments of the present disclosure may be a general-purpose processor, which includes a central processing unit (CPU), a network processor (NP), a microprocessor, etc., or may be other conventional processors, etc. The processor may also be a digital signal processor (DSP), an application specific integrated circuit (ASIC), a field programmable gate array (FPGA), a discrete logic component or other programmable logic components, a discrete gate or a transistor logic component, a discrete hardware assembly, or other equivalent integrated or discrete logic circuits, or a combination thereof. That is, the processor in the above embodiments may be any processing component or component combination that implements the various methods, steps and logic block diagrams disclosed in the embodiments of the present disclosure. If the embodiments of the present disclosure are partially implemented in software, instructions for the software may be stored in a suitable non-transitory computer readable storage medium, and one or more processors may be used to execute the instructions in hardware to implement the methods of the embodiments of the present disclosure. The term "processor" used herein may refer to the above structure or any other structure suitable for implementation of the techniques described herein.

An embodiment of the present disclosure further provides a video encoding and decoding system, referring to FIG. 1A, which includes the video encoding apparatus described in any one of embodiments of the present disclosure and the video decoding apparatus described in any one of embodiments of the present disclosure.

An embodiment of the present disclosure further provides a non-volatile computer readable storage medium, and the computer readable storage medium stores a computer program. The computer program, when executed by a processor, is capable of implementing the neural network based loop filtering methods described in any one of embodiments of the present disclosure, or implementing the video decoding method described in any one of embodiments of the present disclosure, or implementing the video encoding method described in any one of embodiments of the present disclosure.

In one or more of the above exemplary embodiments, the described functions may be implemented in hardware, software, firmware, or any combination thereof. If these functions are implemented in software, the functions may be stored on a computer readable medium or transmitted by the computer readable medium as one or more instructions or codes, which are executed by a hardware-based processing unit. The computer readable medium may include a computer-readable storage medium corresponding to a tangible medium such as a data storage medium, or may include a communication medium including any medium that facilitates the transfer of a computer program from one place to another, for example, transfer according to a communication protocol. In this manner, the computer-readable medium may generally correspond to a non-transitory tangible computer-readable storage medium or a communication medium such as a signal or a carrier. The data storage medium may be any available medium that may be accessed by one or more computers or one or more processors to retrieve instructions, codes and/or data structures for implementation of the technologies described in the present disclosure. A computer program product may include a computer-readable medium.

By way of example but not limitation, such computer readable storage media may include RAM, ROM, EEPROM, CD-ROM or other optical storage devices, magnetic storage devices or other magnetic storage devices, a flash memory, or any other media that may be used to store desired program codes in the form of instructions or data structures and that may be accessed by a computer. Moreover, any connection may also be referred to as a computer-readable medium. For example, if a coaxial cable, a fiber optic cable, a twisted pair cable, a digital subscriber line (DSL), or a wireless technology such as infrared, radio, or microwave is used to transmit instructions from a website, a server, or other remote sources, then the coaxial cable, the fiber optic cable, the twisted pair cable, the DSL, or the wireless technology such as infrared, radio, or microwave are included in the definition of medium. However, it should be understood that computer-readable storage media and data storage media do not include connections, carriers, signals, or other transient (transitory) media, but are instead directed to non-transitory tangible storage media. As used herein, a disk and a light disk include a compact disc (CD), a laser disc, an optical disc, a digital versatile disc (DVD), a floppy disk, or a Blu-ray disc, etc., where the disk usually reproduces data magnetically, while the light disk reproduces data optically with lasers. Combinations of the above description should also be included within the scope of the computer-readable media.

## Claims

1. A neural network based loop filtering (NNLF) method, applied to a filter for NNLF at a decoding side, wherein the filter for NNLF comprises a neural network and a skip connection branch from an input to an output of the filter for NNLF, and the method comprises:

   decoding a residual offset usage flag roflag of a reconstructed picture, wherein the roflag is used to indicate whether residual offset needs to be performed when NNLF is performed on the reconstructed picture; and
   performing NNLF on the reconstructed picture using a first mode in response to determining, according to the roflag, that residual offset does not need to be performed, or performing NNLF on the reconstructed picture using a second mode in response to determining, according to the roflag, that residual offset needs to be performed; wherein the first mode is an NNLF mode that residual offset is not performed on a residual picture output by the neural network, and the second mode is an NNLF mode that residual offset is performed on the residual picture.

2. The method according to claim 1, wherein a residual of the residual picture becomes smaller by performing residual offset;
   the reconstructed picture is a reconstructed picture of a current frame or a current slice or a current block; and the residual offset usage flag is a picture-level syntax element or a block-level syntax element.

3. The method according to claim 1, wherein performing NNLF on the reconstructed picture using the first mode comprises:

   adding the residual picture output by the neural network and a reconstructed picture input into the neural network, to obtain a filtered picture that is output after NNLF is performed on the reconstructed picture; and

wherein performing NNLF on the reconstructed picture using the second mode comprises:

performing residual offset on the residual picture according to one of set residual offset modes, and adding with the reconstructed picture, to obtain a filtered picture that is output after NNLF is performed on the reconstructed picture; wherein there are one or more set residual offset modes.

4. The method according to claim 3, wherein in a case where there are a plurality of set residual offset methods, performing residual offset on the residual picture according to one of the set residual offset modes comprises:

continuing to decode an index of residual offset mode of the reconstructed picture, wherein the index is used to indicate a residual offset mode to be based when residual offset is performed; and

performing residual offset on the residual picture according to a residual offset mode indicated by the index.

5. The method according to claim 1, wherein the set residual offset modes comprise one or more of following types:

adding or subtracting a fixed value to a non-zero residual value in the residual picture, to enable an absolute value of the non-zero residual value to become smaller; or

adding or subtracting, according to an interval in which a non-zero residual value in the residual picture is located, an offset value corresponding to the interval to the non-zero residual value, to enable an absolute value of the non-zero residual value to become smaller; wherein there are a plurality of intervals, and a larger value in the interval, larger the offset value corresponding to the interval.

6. A neural network based loop filtering (NNLF) method, applied to a filter for NNLF at a decoding side, wherein the filter for NNLF comprises a neural network and a skip connection branch from an input to an output of the filter for NNLF, and the method comprises:

when NNLF is performed on a reconstructed picture comprising three components input to the neural network, performing following processes for each component of the reconstructed picture:

decoding a residual offset usage flag roflag of the component of the reconstructed picture, wherein the roflag is used to indicate whether residual offset needs to be performed when NNLF is performed on the component of the reconstructed picture; and

performing NNLF on the component of the reconstructed picture using a first mode in response to determining, according to the roflag, that residual offset does not need to be performed, or performing NNLF on the component of the reconstructed picture using a second mode in response to determining, according to the roflag, that residual offset needs to be performed;

wherein the first mode is an NNLF mode that residual offset is not performed on the component of a residual picture output by the neural network, and the second mode is an NNLF mode that residual offset is performed on the component of the residual picture.

7. The method according to claim 6, wherein a residual in the component of the residual picture becomes smaller by performing residual offset;

the reconstructed picture is a reconstructed picture of a current frame or a current slice or a current block; and the residual offset usage flag is a picture-level syntax element or a block-level syntax element.

8. The method according to claim 6, wherein performing NNLF on the component of the reconstructed picture using the first mode comprises:

adding the component of the residual picture and the component of the reconstructed picture, to obtain the component of a filtered picture that is output after NNLF is performed on the reconstructed picture; and

wherein performing NNLF on the component of the reconstructed picture using the second mode comprises:

performing residual offset on the component of the residual picture according to one of set residual offset modes for the component, and adding with the component of the reconstructed picture, to obtain the component of a filtered picture that is output after NNLF is performed on the reconstructed picture; wherein there are one or more set residual offset modes for the component.

9. The method according to claim 8, wherein in a case where there are a plurality of set residual offset methods for the component, performing residual offset on the component of the residual picture according to one of the set residual offset modes for the component comprises:

continuing to decode an index of residual offset mode of the component of the reconstructed picture, wherein the index is used to indicate a residual offset mode to be based when residual offset is performed; and
performing residual offset on the component of the residual picture according to a residual offset mode indicated by the index.

10. The method according to claim 6, wherein set residual offset modes for the three components are same or different; and
set residual offset modes for at least one of the three components comprise one or more of following types:

adding or subtracting a fixed value to a non-zero residual value in the residual picture, to enable an absolute value of the non-zero residual value to become smaller; or
adding or subtracting, according to an interval in which a non-zero residual value in the residual picture is located, an offset value corresponding to the interval to the non-zero residual value, to enable an absolute value of the non-zero residual value to become smaller; wherein there are a plurality of intervals, and a larger value in the interval, larger the offset value corresponding to the interval.

11. A video decoding method, applied to a video decoding apparatus and comprising:
performing following processes when neural network based loop filtering (NNLF) is performed on a reconstructed picture:
responsive to that NNLF enables residual offset, performing NNLF on the reconstructed picture according to the method of any one of claims 1 to 10.

12. The method according to claim 11, wherein it is determined that NNLF enables residual offset responsive to that one or more of following conditions are met:

decoding a sequence-level residual offset enabled flag, and determining that NNLF enables residual offset according to the sequence-level residual offset enabled flag; or
decoding a picture-level residual offset enabled flag, and determining that NNLF enables residual offset according to the picture-level residual offset enabled flag.

13. The method according to claim 11, further comprising:
responsive to that NNLF disables residual offset, adding a reconstructed picture input into the neural network and a residual picture output by the neural network, to obtain a filtered picture that is output after NNLF is performed on the reconstructed picture.

14. The method according to claim 10, wherein the filter for NNLF is arranged after a deblocking filter or a sample adaptive offset filter and before an adaptive loop filter.

15. A neural network based loop filtering (NNLF) method, applied to a filter for NNLF at an encoding side, wherein the filter for NNLF comprises a neural network and a skip connection branch from an input to an output of the filter for NNLF, and the method comprises:

inputting a reconstructed picture into the neural network, to obtain a residual picture output by the neural network;
calculating a rate distortion cost $cost_1$ of performing NNLF on the reconstructed picture using a first mode and a rate distortion cost $cost_2$ of performing NNLF on the reconstructed picture using a second mode, wherein the first mode is an NNLF mode that residual offset is not performed on the residual picture, and the second mode is an NNLF mode that residual offset is performed on the residual picture; and
selecting the first mode to perform NNLF on the reconstructed picture responsive to that the $cost_1$ is less than the $cost_2$ selecting the second mode to perform NNLF on the reconstructed picture responsive to that the $cost_2$ is less than the $cost_1$, or selecting the first mode or the second mode to perform NNLF on the reconstructed picture responsive to that the $cost_1$ is equal to the $cost_2$.

16. The method according to claim 15, wherein the reconstructed picture is a reconstructed picture of a current frame or a current slice or a current block; and a residual of the residual picture becomes smaller by performing residual offset.

17. The method according to claim 15, wherein calculating the rate distortion cost $cost_1$ of performing NNLF on the reconstructed picture using the first mode comprises:

adding the residual picture and the reconstructed picture, to obtain a first filtered picture; and calculating the $cost_1$ according to a difference between the first filtered picture and a corresponding original picture; and

wherein selecting the first mode to perform NNLF on the reconstructed picture comprises:

taking the first filtered picture obtained by adding the residual picture and the reconstructed picture as a filtered picture that is output after NNLF is performed on the reconstructed picture.

18. The method according to claim 17, wherein calculating the rate distortion cost $cost_2$ of performing NNLF on the reconstructed picture using the second mode comprises:

performing residual offset on the residual picture according to each of set residual offset modes, and adding with the reconstructed picture, to obtain a respective second filtered picture; calculating a respective rate distortion cost according to a difference between the respective second filtered picture and the original picture; and taking a minimum rate distortion cost among all calculated rate distortion costs as the $cost_2$; wherein there are one or more set residual offset modes.

19. The method according to claim 18, wherein selecting the second mode to perform NNLF on the reconstructed picture comprises:

taking a second filtered picture obtained by performing residual offset on the residual picture according to a residual offset mode corresponding to the $cost_2$ and adding with the reconstructed picture, as the filtered picture that is output after NNLF is performed on the reconstructed picture.

20. The method according to claim 18, wherein both the reconstructed picture and the residual picture comprise three components;

the $cost_1$ is obtained by calculating sum of squared differences (SSDs) between the first filtered picture and the original picture on the three components and performing weighted sum on the SSDs on the three components; and

wherein calculating the respective rate distortion cost according to the difference between the respective second filtered picture and the original picture comprises:

calculating SSDs between the respective second filtered picture and the original picture on the three components, and performing weighted sum on the SSDs on the three components, to obtain the respective rate distortion cost.

21. The method according to claim 18, wherein the set residual offset modes comprise one or more of following types:

adding or subtracting a fixed value to a non-zero residual value in the residual picture, to enable an absolute value of the non-zero residual value to become smaller; or

adding or subtracting, according to an interval in which a non-zero residual value in the residual picture is located, an offset value corresponding to the interval to the non-zero residual value, to enable an absolute value of the non-zero residual value to become smaller; wherein there are a plurality of intervals, and a larger value in the interval, larger the offset value corresponding to the interval.

22. A neural network based loop filtering (NNLF) method, applied to a filter for NNLF at an encoding side, wherein the filter for NNLF comprises a neural network and a skip connection branch from an input to an output of the filter for NNLF, and the method comprises:

inputting a reconstructed picture into the neural network, to obtain a residual picture output by the neural network, wherein both the reconstructed picture and the residual picture comprise three components; and

performing following processes for each component of the reconstructed picture and the residual picture:

calculating a rate distortion cost $cost_1$ of performing NNLF on the component of the reconstructed picture using a first mode and a rate distortion cost $cost_2$ of performing NNLF on the component of the reconstructed picture using a second mode, wherein the first mode is an NNLF mode that residual offset is not performed on the component of the residual picture, and the second mode is an NNLF mode that residual offset is performed on the component of the residual picture; and

selecting the first mode to perform NNLF on the component of the reconstructed picture responsive to that the $cost_1$ is less than the $cost_2$, selecting the second mode to perform NNLF on the component of the reconstructed picture responsive to that the $cost_2$ is less than the $cost_1$, or selecting the first mode or the second mode to perform NNLF on the reconstructed picture responsive to that the $cost_1$ is equal to the $cost_2$.

23. The method according to claim 22, wherein the reconstructed picture is a reconstructed picture of a current frame or a current slice or a current block; and a residual in the component of the residual picture becomes smaller by performing residual offset.

24. The method according to claim 24, wherein calculating the rate distortion cost $cost_1$ of performing NNLF on the component of the reconstructed picture using the first mode comprises:

adding the component of the residual picture and the component of the reconstructed picture, to obtain the filtered component ; and calculating the $cost_1$ according to a difference between the filtered component and the component of a corresponding original picture;
wherein selecting the first mode to perform NNLF on the component of the reconstructed picture comprises:
taking the filtered component obtained by adding the component of the residual picture and the component of the reconstructed picture as the component of a filtered picture that is output after NNLF is performed on the reconstructed picture.

25. The method according to claim 22, wherein calculating the rate distortion cost $cost_2$ of performing NNLF on the component of the reconstructed picture using the second mode comprises:

performing residual offset on the component of the residual picture according to each of set residual offset modes for the component, and adding with the component of the reconstructed picture, to obtain the respective filtered component; and calculating a respective rate distortion cost of the component according to a difference between the respective filtered component and the component of a corresponding original picture; and
taking a minimum rate distortion cost among all calculated rate distortion costs of the component as the $cost_2$ of the component; wherein there are one or more set residual offset modes for the component.

26. The method according to claim 25, wherein selecting the second mode to perform NNLF on the component of the reconstructed picture comprises:
taking the filtered component obtained by performing residual offset on the component of the residual picture according to a residual offset mode corresponding to the $cost_2$ of the component and adding with the component of the reconstructed picture, as the component of a filtered picture that is output after NNLF is performed on the reconstructed picture.

27. The method according to claim 25, wherein set residual offset modes for the three components are same or different; and
set residual offset modes for at least one of the three components comprise one or more of following types:

adding or subtracting a fixed value to a non-zero residual value in the residual picture, to enable an absolute value of the non-zero residual value to become smaller; or
adding or subtracting, according to an interval in which a non-zero residual value in the residual picture is located, an offset value corresponding to the interval to the non-zero residual value, to enable an absolute value of the non-zero residual value to become smaller; wherein there are a plurality of intervals, and a larger value in the interval, larger the offset value corresponding to the interval.

28. A video encoding method, applied to a video encoding apparatus and comprising:
performing following processes when neural network based loop filtering (NNLF) is performed on a reconstructed picture:

responsive to that NNLF enables residual offset, performing NNLF on the reconstructed picture according to the method of any one of claims 15 to 27; and
encoding a residual offset usage flag of the reconstructed picture, to indicate whether residual offset needs to be performed when NNLF is performed on the reconstructed picture.

29. The method according to claim 28, wherein the residual offset usage flag is a picture-level syntax element or a block-level syntax element.

30. The method of claim 28, wherein it is determined that NNLF enables residual offset responsive to that one or more of following conditions are met:

decoding a sequence-level residual offset enabled flag, and determining that NNLF enables residual offset according to the sequence-level residual offset enabled flag; or

decoding a picture-level residual offset enabled flag, and determining that NNLF enables residual offset according to the picture-level residual offset enabled flag.

31. The method of claim 28, further comprising:
responsive to that it is determined that NNLF disables residual offset, skipping encoding of the residual offset usage flag, and adding the reconstructed picture input into the neural network to the residual picture output by the neural network, to obtain a filtered picture that is output after NNLF is performed on the reconstructed picture.

32. The method of claim 28, wherein the method is to perform NNLF on the reconstructed picture according to the method of claims 15 to 21;
a number of residual offset usage flags roflags of the reconstructed picture is one; responsive to that a first mode is selected to perform NNLF on the reconstructed picture, the roflag is set to a value indicating that residual offset does not need to be performed; and responsive to that a second mode is selected to perform NNLF on the reconstructed picture, the roflag is set to a value indicating that residual offset needs to be performed.

33. The method according to claim 32, wherein the method is to perform NNLF on the reconstructed picture according to the method of claims 18 to 21, and the method further comprises:
responsive to that the roflag is set as the value indicating that residual offset needs to be performed and there are a plurality of set residual offset modes, continuing to encode an index of residual offset mode of the reconstructed picture, to indicate a residual offset mode to be based when residual offset is performed.

34. The method of claim 28, wherein the method is to perform NNLF on the reconstructed picture according to the method of claims 22 to 27;
a number of residual offset usage flags roflag(j) of the reconstructed picture is three, j being 1, 2 and 3, and the roflag(j) is used to indicate whether residual offset needs to be performed when NNLF is performed on a j-th component of the reconstructed picture; responsive to that a first mode is selected to perform NNLF on the j-th component of the reconstructed picture, the roflag(j) is set to a value indicating that residual offset does not need to be performed; and responsive to that a second mode is selected to perform NNLF on the j-th component of the reconstructed picture, the roflag(j) is set to a value indicating that residual offset needs to be performed.

35. The method of claim 34, wherein the method is to perform NNLF on the reconstructed picture according to the method of claims 25 to 27, and the method further comprises:
responsive to that the roflag(j) is set to the value indicating that residual offset needs to be performed and there are a plurality of set residual offset modes for the j-th component, continuing to encode an index of residual offset mode index(j) of the j-th component of the reconstructed picture, to indicate a residual offset mode to be based when residual offset is performed on the j-th component of the residual picture.

36. A bitstream, wherein the bitstream is generated according to the video encoding method of any one of claims 28 to 35.

37. A neural network based loop filter, comprising a processor and a memory storing a computer program, wherein the processor, when executing the computer program, is capable of implementing the neural network based loop filtering methods of any one of claims 1 to 10 or 15 to 27.

38. A video decoding apparatus, comprising a processor and a memory storing a computer program, wherein the processor, when executing the computer program, is capable of implementing the video decoding method according to any one of claims 11 to 14.

39. A video encoding apparatus, comprising a processor and a memory storing a computer program, wherein the processor, when executing the computer program, is capable of implementing the video encoding method according to any one of claims 28 to 35.

40. A video encoding and decoding system, comprising the video encoding apparatus of claim 39 and the video decoding apparatus of claim 38.

41. A non-transitory computer readable storage medium storing a computer program, wherein the computer program, when executed by a processor, is capable of implementing the neural network based loop filtering methods according to any one of claims 1 to 10 or 15 to 22, or implementing the video decoding method according to any one of claims 11 to 14, or implementing the video encoding method according to any one of claims 28 to 35.

Encoding side apparatus

Data source 11

Video encoding apparatus 13

Output interface 15

1

Decoding side apparatus 2

Input interface 21

Video decoding apparatus 23

Display apparatus 25

3

FIG. 1A

Video data

Partition unit 101

Video encoding apparatus 10

+ 102 -

Transform processing unit 104

Quantization unit 106

Prediction unit 100

112 + +

Inverse transformation unit 110

Inverse quantization unit 108

Inter prediction unit 121

Filter unit 113

Entropy coding unit 115

Intra prediction unit 126

Decoded Picture buffer 114

Encoded video stream

FIG. 1B

Video decoding apparatus 15

Prediction unit 152

Inter prediction unit 162

Intra prediction unit 164

Encoded video bitstream

Entropy decoding unit 150

Inverse quantization unit 154

Inverse transform processing unit 155

158

Filter unit 159

Decoded picture buffer 160

Decoded video frame sequence

FIG. 1C

Reconstructed Picture

20

Deblocking filter (DBF)

22

Sample adaptive offset Filter (SAO)

24

Neural network based loop filter (NNLF)

26

Adaptive loop filter (ALF)

Reconstructed picture after filtering

FIG. 2

FIG. 3A

FIG. 3B

FIG. 3C

FIG. 4A

FIG. 4B

FIG. 4C

FIG. 5

FIG. 6A

FIG. 6B

A reconstructed picture is input into a neural network, to obtain a residual picture output by the neural network

S110

A rate distortion cost cost1 of performing NNLF on the reconstructed picture using a first mode is calculated, and a rate distortion cost cost2 of performing NNLF on the reconstructed picture using a second mode is calculated

S120

The first mode is selected to perform NNLF on the reconstructed picture in a case of cost1 ≤ cost2; and the second mode is selected to perform NNLF on the reconstructed picture in a case of cost2 < cost1

S130

FIG. 7

A reconstructed picture is input into a neural network, to obtain a residual picture output by the neural network; where both the reconstructed picture and the residual picture include three components

S210

Mode selection processing of NNFL is performed on each of the three components

S220

FIG. 8

Responsive to that NNLF enables residual offset, NNLF is performed on the reconstructed picture according to the NNLF methods described in any one of embodiments of the present disclosure

S310

A residual offset usage flag of the reconstructed picture is encoded, to indicate whether residual offset needs to be performed when NNLF is performed on the reconstructed picture

S320

FIG. 9

A residual offset usage flag roflag of a reconstructed picture is decoded, where the roflag is used to indicate whether residual offset needs to be performed when NNLF is performed on the reconstructed picture    S410

NNLF is performed on the reconstructed picture using a first mode in response to determining, according to the roflag, that residual offset does not need to be performed, or NNLF is performed on the reconstructed picture using a second mode in response to determining, according to the roflag, that residual offset needs to be performed    S420

FIG.10

Reconstructed picture

NN

RO

Reconstructed picture after NNLF

FIG.11

A residual offset usage flag roflag of the component of a reconstructed picture is decoded

S510

NNLF is performed on the component of the reconstructed picture using a first mode in response to determining, according to the roflag, that residual offset does not need to be performed, or NNLF is performed on the component of the reconstructed picture using a second mode in response to determining, according to the roflag, that residual offset needs to be performed

S520

FIG.12

It is determined whether NNLF enables residual offset

S610

Responsive to that residual offset enables residual offset, NNLF is performed on the reconstructed picture according to the NNLF methods described in any one of embodiments of the present disclosure

S620

FIG.13

Reconstructed
picture

DBF

SAO

NN

RO

ALF

Reconstructed
picture after NNLF

FIG.14

Processor

System bus

Operating
system

Computer
program

Memory

Storage

Network
interface

FIG.15

| -4 | 0 | 12 | 6 |
|----|---|----|---|
| 0 | 4 | 9 | -7 |

⟶

| -3 | 0 | 11 | 5 |
|----|---|----|---|
| 0 | 3 | 8 | -6 |

FIG.16

## INTERNATIONAL SEARCH REPORT

| | International application No. |
| --- | --- |
| | **PCT/CN2022/125231** |

| A. | CLASSIFICATION OF SUBJECT MATTER |
| --- | --- |

H04N19/30(2014.01)i;  H04N19/42(2014.01)i;  H04N19/70(2014.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT; WPABSC; ENTXTC; DWPI; CNKI; IEEE; JVET: 残差, 残余, 调整, 环路滤波, 加, 减, 滤波, 偏移, 神经网络, 校正, 修改, 值, Residuals, Adjustments, Loop Filtering, Adding, Subtracting, Filtering, Offset, Neural Network, Correction, Modification, Value

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2022286695 A1 (LEMON INC.) 08 September 2022 (2022-09-08) description, paragraphs 4-349, and figures 13A-13D | 1-41 |
| A | WO 2021249290 A1 (HUAWEI TECHNOLOGIES CO., LTD.) 16 December 2021 (2021-12-16) entire document | 1-41 |
| A | WO 2022166462 A1 (HUAWEI TECHNOLOGIES CO., LTD.) 11 August 2022 (2022-08-11) entire document | 1-41 |
| A | WO 2022072239 A1 (QUALCOMM INC.) 07 April 2022 (2022-04-07) entire document | 1-41 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 June 2023** | **26 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/125231**

| Patent document cited in search report | | | Publication date (day/month/year) | Patent family member(s) | | | Publication date (day/month/year) |
|---|---|---|---|---|---|---|---|
| US | 2022286695 | A1 | 08 September 2022 | None | | | |
| WO | 2021249290 | A1 | 16 December 2021 | None | | | |
| WO | 2022166462 | A1 | 11 August 2022 | None | | | |
| WO | 2022072239 | A1 | 07 April 2022 | BR | 112023004483 | A2 | 04 April 2023 |
| | | | | TW | 202213996 | A | 01 April 2022 |
| | | | | US | 2022103816 | A1 | 31 March 2022 |

Form PCT/ISA/210 (patent family annex) (July 2022)